(19) Europäisches Patentamt
European Patent Office
Office européen des brevets

(11) EP 4 530 303 A1

(12) **EUROPEAN PATENT APPLICATION**
published in accordance with Art. 153(4) EPC

(43) Date of publication:
**02.04.2025 Bulletin 2025/14**

(21) Application number: **23819820.4**

(22) Date of filing: **06.06.2023**

(51) International Patent Classification (IPC):
***C08F 299/02*** *(2006.01)* ***C08F 2/08*** *(2006.01)*
***C08F 2/24*** *(2006.01)*

(52) Cooperative Patent Classification (CPC):
**C08F 2/08; C08F 2/24; C08F 299/02**

(86) International application number:
**PCT/JP2023/020919**

(87) International publication number:
**WO 2023/238840 (14.12.2023 Gazette 2023/50)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **09.06.2022 JP 2022093463**

(71) Applicant: **SHIN-ETSU CHEMICAL CO., LTD.**
**Tokyo 1000005 (JP)**

(72) Inventors:
- **OKI Takahito**
**Annaka-shi, Gunma 379-0224 (JP)**
- **AOKI Shunji**
**Annaka-shi, Gunma 379-0224 (JP)**
- **ONO Ichiro**
**Annaka-shi, Gunma 379-0224 (JP)**

(74) Representative: **Angerhausen, Christoph**
**Boehmert & Boehmert**
**Anwaltspartnerschaft mbB**
**Pettenkoferstrasse 22**
**80336 München (DE)**

(54) **COPOLYMER, ELASTOMER SPHERICAL PARTICLES, LIQUID DISPERSION OF ELASTOMER SPHERICAL PARTICLES, AND METHODS FOR PRODUCING THESE**

(57) Provided is a copolymer having polyester and polyether structures and exhibiting high level of degradability by external stimuli such as light, preferably a polyester-polyether copolymer having at least two radical polymerizable unsaturated groups per molecule; an elastomer spherical particle composed of the copolymers as structural units, and methods of producing these. Also provided are a copolymer having a polyester structure and a polyether structure; and an elastomer spherical particle composed of a polymer containing structural units originated from the copolymer having a polyester structure and a polyether structure, wherein the spherical particle has a volume-average particle diameter of 0.5 to 200 μm.

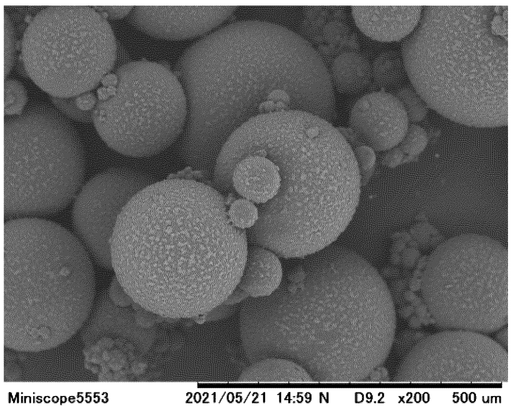


FIG.1

EP 4 530 303 A1

## Description

Technical Field

The present invention relates to elastomer spherical particles, a dispersion liquid of elastomer spherical particles, and methods for producing these.

Background Art

As raw material rubbers for use in rubber products, there have been conventionally and frequently used, for example,

<1> Polymers whose repeating units consist only of conjugated diene units, such as those typified by butadiene rubber, isoprene rubber, chloroprene rubber, and natural rubber;
<2> Polymers whose repeating units essentially consist of conjugated diene units and aromatic vinyl units, such as those typified by styrene-butadiene copolymer rubber, styrene-isoprene copolymer rubber, and styrene-isoprene-butadiene copolymer rubber;
<3> Polymers whose repeating units essentially consist of conjugated diene units and $\alpha,\beta$-unsaturated nitrile units, such as those typified by acrylonitrile-butadiene copolymer rubber;
<4> Polymers whose repeating units essentially consist of acrylate units, such as those typified by acrylic rubber;
<5> Polymers whose repeating units consist of ethylene, $\alpha$-olefins having 3 to 12 carbon atoms, and optionally, if nessesary, non-conjugated polyenes, such as those typified by ethylenepropylene rubber; and
<6> Polymers whose repeating units consist of dimethylsiloxane units, such as those typified by silicone rubber.

Elastomer (rubber) spherical particles, especially those having an organic skeleton, are used primarily for electronic material applications, including electronic devices, to improve various properties such as impact resistance, thermal shock resistance, and adhesion.

Meanwhile, uses for silicone rubber spherical particles and powders have been proposed in a wide range of industrial fields. For example, formulation of those into, for example, synthetic resin materials (see Patent documents 1 and 2), synthetic rubber materials (see Patent document 3), or cosmetics (see Patent documents 4 to 7) has been reported.

These silicone rubber spherical particles are mixed and used as, for example, a stress-lowering agent for an organic resin such as an epoxy resin taking advantage of their "flexibility". That is, the difference in the thermal expansion coefficient between electronic components and organic resins such as epoxy resins can cause stress to the resin, leading to cracks and breakage which, however, can be prevented from being occurred by adding the silicone rubber spherical particles.

Specifically, there are proposed, for example, epoxy resin containing spherical particles of cured polymer material having a linear organopolysiloxane block (see Patent document 8), an epoxy resin containing silicone rubber spherical particles whose surfaces are coated with polyorganosilsesquioxane (see Patent document 9).

Also disclosed is a method of copolymerizing, in an emulsion system, a (meth)acrylic acid ester and a diorganopolysiloxane having a radically polymerizable functional group-containing organic group at one end to prepare silicone-containing rubber spherical particles (Patent document 10).

These spherical particles are used for the purpose of imparting slipperiness to a thermoplastic resin.

Patent document 11 discloses an organic crosslinked rubber spherical particles formed by crosslinking a fluid composition consisting of an organic compound, containing aliphatically unsaturated bonds, and a silicon-containing organic compound, containing silicon atom-bonded hydrogen atoms, via a hydrosilylation reaction, and these particles are proposed as those that have good dispersibility and handleability in various components such as resins, coatings, and rubbers.

Furthermore, silicone rubber spherical particles are used in a wide range of cosmetics and cosmetic materials, such as makeup cosmetics such as foundations and makeup bases, basic cosmetics such as creams and milky lotions, and sunscreen cosmetics, for the purposes of imparting a soft feel, smoothness, and other usability properties to cosmetics, and of producing a natural light scattering finish and making pores, wrinkles, and the like less visible.

For example, cosmetics containing polymethylsilsesquioxane particles/powder (see Patent document 12), make-up cosmetics containing silicone rubber spherical particles/powder (see Patent document 13), and cosmetics containing composite silicone powder obtained by coating silicone rubber spherical fine particles with polyorganosilsesquioxane resin (see Patent document 14) are proposed. These silicone rubber spherical particles and composite particles obtained by coating silicone rubber spherical particles with polyorganosilsesquioxane resin can provide cosmetics with a soft feeling in addition to the above-described feeling on use.

Prior Art Documents

Patent documents

Patent document 1: JP-A-S63-12489
Patent document 2: JP-A-H6-55805
Patent document 3: JP-A-H2-102263
Patent document 4: JP-A-H8-12546
Patent document 5: JP-A-H8-12545
Patent document 6: JP-A-H4-17162
Patent document 7: JP-A-H4-66446
Patent document 8: JP-A-S58-219218
Patent document 9: JP-A-H8-85753
Patent document 10: JP-A-H10-182987
Patent document 11: JP-A-2001-40214
Patent document 12: JP-A-S63-297313
Patent document 13: JP-A-H8-12524
Patent document 14: JP-A-H9-20631

Summary of Invention

Technical Problem

However, the silicon rubber spherical particles to be formulated in resins or cosmetic materials do not have a degradable skeleton or units within their particle structure, and therefore, they do not decompose and will remain in the environment once they are released or disposed of into a natural environment such as into the soil, land water, marine water, or ocean. Furthermore, since these silicone rubber spherical particles have very mall particle sizes, it is significantly difficult to recover them and is practically impossible to prevent the release into, for example, the ocean.
In addition, there have been movements to restrict microplastics because plastics/microplastics having very small sizes rereleased in the ocean have a property of adsorbing pathogens and hazardous substances in the environment, which leads to a concern that the ecosystem will be negatively impacted
Due to such background, there is a gradual demand for a type of silicone rubber spherical particles or elastomer (rubber) spherical particles that are degradable and do not persistently remain as particles (solid) in the environment after use. In order for such elastomer (rubber) particles to be environmentally degraded, the crosslinked structure of the particles needs to be degraded or broken in the environment; however, silicone rubber spherical particles structurally do not have a degradability.
The present invention has been made in view of the above circumstances, and it is an object of the present invention to provide: elastomer (rubber) spherical particles each composed of copolymers as structural units, where the copolymer exhibits high level of degradability by external stimuli such as light, heat, acid, and base in a natural environment such as in the soil, land water, marine water, or ocean; a dispersion liquid of the elastomer spherical particles; and methods of producing these.
It is also an object of the present invention to provide a copolymer that is suitable for producing the above-mentioned elastomer (rubber) spherical particles and has high degradability by external stimuli.

Solution to Problem

The inventors have conducted intensive studies to achieve the foregoing object and have consequently found that a copolymer having specific polyester and polyether structures, elastomer spherical particles each composed of a polymer containing structural units originated from the copolymer, and a dispersion liquid thereof can achieve the foregoing object, thus completing the present invention.
Accordingly, the present invention provides a copolymer, elastomer spherical particles, a dispersion liquid of the elastomer spherical particles, and methods for producing these, which are as defined below.

<1>. A polyester-polyether copolymer having at least two radical polymerizable unsaturated groups per molecule which is represented by a general formula (1) or (2) defined as:

[Chem. 1]

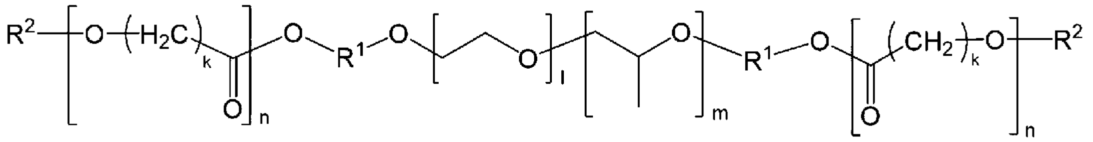

- (1)

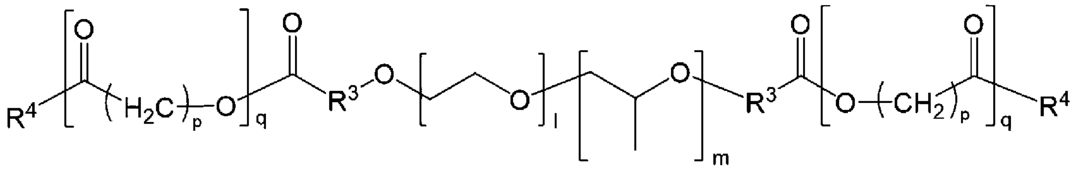

- (2)

wherein, in the general formula (1), each $R^1$ independently represents a divalent hydrocarbon group having 1 to 10 carbon atoms, each $R^2$ independently represents a radically polymerizable functional group-containing organic group represented by a general formula (3a), (3b), or (3c) as defined below, each k independently represents a number that satisfies $1 \leq k \leqq 10$, 1 is a number that satisfies $1 \leq 1 \leq 1{,}000$, m is a number that satisfies $1 \leq m \leq 1{,}000$, each n independently represents a number that satisfies $1 \leq n \leqq 100$, and
wherein, in the general formula (2), each $R^3$ independently represents a divalent hydrocarbon group having 1 to 10 carbon atoms, each $R^4$ independently represents a radically polymerizable functional group-containing organic group represented by a general formula (4a) or (4b) as defined below, each p independently represents a number that satisfies $1 \leq p \leqq 10$, 1 is a number that satisfies $1 \leq 1 \leq 1{,}000$, m is a number that satisfies $1 \leq m \leq 1{,}000$, each q independently represents a number that satisfies $1 \leq q \leq 100$,

[Chem. 2]

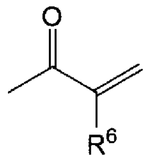

- (3a)

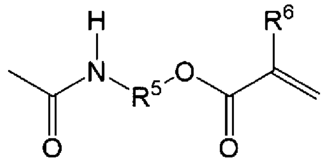

- (3b)

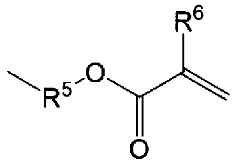

- (3c)

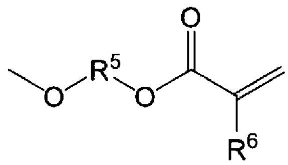

- (4a)

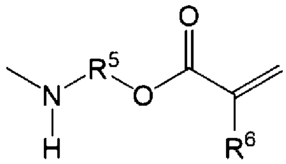

- (4b)

wherein, in the general formulae (3a), (3b), (3c), (4a), and (4b), each $R^5$ independently represents a divalent hydrocarbon group having 1 to 8 carbon atoms, each $R^6$ independently represents a hydrogen atom or a hydrocarbon group having 1 to 3 carbon atoms.

<2>. The polyester-polyether copolymer according to <2> represented by a general formula (5) defined as:

[Chem. 3]

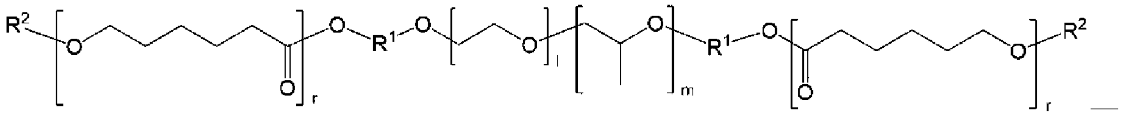

— ( 5 )

wherein, in the general formula (5), each $R^1$ independently represents a divalent hydrocarbon group having 1 to 10 carbon atoms, 1 is a number that satisfies $1 \leq 1 \leq 1{,}000$, m is a number that satisfies $1 \leq m \leq 1{,}000$, each r independently represents a number that satisfies $1 \leq r \leq 100$, and each $R^2$ independently represents a radically polymerizable functional group-containing organic group represented by a general formula (3a), (3b), or (3c) defined as

[Chem. 4]

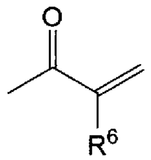

- (3a)

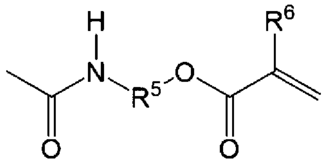

- (3b)

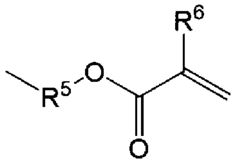

- (3c)

wherein, in the general formulae (3a), (3b), and (3c), each $R^5$ independently represents a divalent hydrocarbon group having 1 to 8 carbon atoms, each $R^6$ independently represents a hydrogen atom or a hydrocarbon group having 1 to 3 carbon atoms.)

<3>. An elastomer spherical particle composed of a polymer containing a structural unit originated from a copolymer comprising a polyester structure and a polyether structure, wherein the spherical particle has a volume-average particle diameter of 0.5 to 200 $\mu$m.

<4> The elastomer spherical particle according to <3>, wherein the copolymer is a polyester-polyether copolymer having at least two radical polymerizable unsaturated groups per molecule.

<5> The elastomer spherical particle according to <4>, wherein the copolymer is a polyester-polyether copolymer represented by a general formula (1) or (2) defined as:

[Chem. 5]

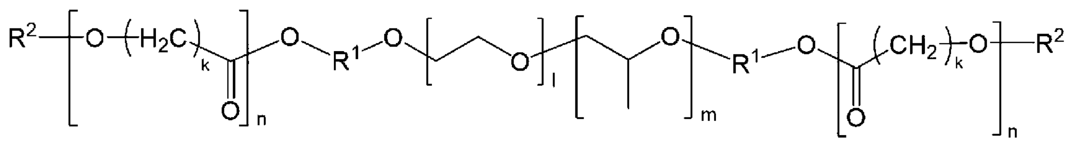

- (1)

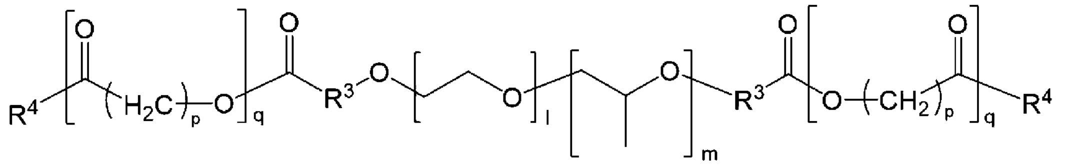

- (2)

wherein, in the general formula (1), each $R^1$ independently represents a divalent hydrocarbon group having 1 to 10 carbon atoms, each $R^2$ independently represents a radically polymerizable functional group-containing organic group represented by a general formula (3a), (3b), or (3c) as defined below, each k independently is a number that satisfies $1 \leq k \leqq 10$, 1 is a number that satisfies $1 \leq 1 \leq 1,000$, m is a number that satisfies $1 \leq m \leq 1,000$, each n independently represents a number that satisfies $1 \leq n \leqq 100$, and
wherein, in the general formula (2), each $R^3$ independently represents a divalent hydrocarbon group having 1 to 10 carbon atoms, each $R^4$ independently represents a radically polymerizable functional group-containing organic group represented by a general formula (4a) or (4b) as defined below, each p independently represents a number that satisfies $1 \leq p \leqq 10$, 1 is a number that satisfies $1 \leq 1 \leq 1,000$, m is a number that satisfies $1 \leq m \leq 1,000$, each q independently represents a number that satisfies $1 \leq q \leq 100$,

[Chem. 6]

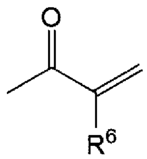

- (3a)

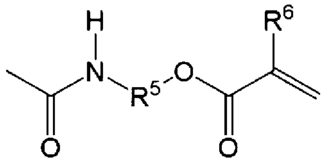

- (3b)

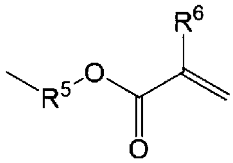

- (3c)

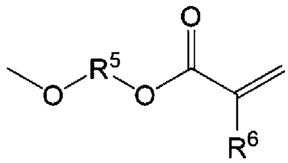

- (4a)

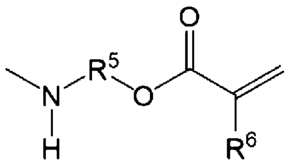

- (4b)

wherein, in the general formulae (3a), (3b), (3c), (4a), and (4b), each $R^5$ independently represents a divalent hydrocarbon group having 1 to 8 carbon atoms, each $R^6$ independently represents a hydrogen atom or a hydrocarbon group having 1 to 3 carbon atoms.

<6> The elastomer spherical particle according to <5>, wherein the copolymer is a polyester-polyether copolymer represented by a general formula (5) defined as:

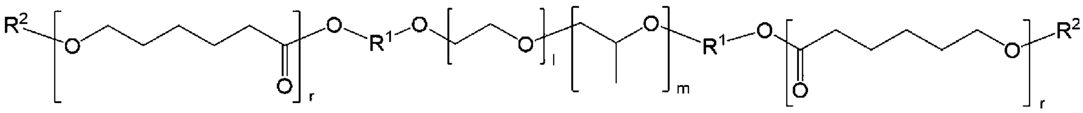

- (5)

[Chem. 7]

wherein, in the general formula (5), each $R^1$ independently represents a divalent hydrocarbon group having 1 to 10 carbon atoms, 1 is a number that satisfies $1 \leq 1 \leq 1{,}000$, m is a number that satisfies $1 \leq m \leq 1{,}000$, each r independently represents a number that satisfies $1 \leq r \leq 100$, and each $R^2$ independently represents a radically polymerizable functional group-containing organic group represented by a general formula (3a), (3b), or (3c) defined as:

[Chem. 8]

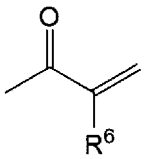

- (3a)

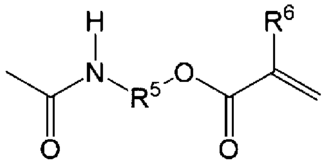

- (3b)

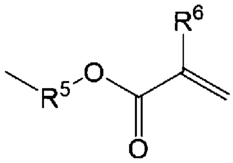

- (3c)

wherein, in the general formulae (3a), (3b), and (3c), each $R^5$ independently represents a divalent hydrocarbon group having 1 to 8 carbon atoms, each $R^6$ independently represents a hydrogen atom or a hydrocarbon group having 1 to 3 carbon atoms.

<7>. A dispersion liquid of the elastomer spherical particle according to any one of <3> to <6>, wherein the elastomer spherical particle is dispersed in at least one type of dispersion medium selected from a silicone oil, a hydrocarbon oil, a higher fatty acid, an ester oil, a liquid oil, and water.

<8> A method of producing the elastomer spherical particle according to <3> to <6>, including the steps (i) and (ii) of

(i) preparing an O/O type or O/W type emulsion by stirring and emulsifying the components of

(A) a copolymer containing a polymerizable group, said copolymer having a polyester structure and a polyether structure,
(B) an oil or aqueous phase component that does not dissolve in the component (A),
(C) a surfactant, and
(D) a polymerization initiator;

(ii) polymerizing the component (A) in the O/O type or O/W type emulsion obtained in the step (i) to obtain a dispersion liquid of elastomer spherical particles; and
(iii) washing, drying and removing the component (B), as continuous phase, from the dispersion liquid of elastomer spherical particles obtained in the step (ii).

<9> The method according to <8>, wherein the step (i) is a step of (i) preparing an O/O type emulsion by stirring and emulsifying the components of

(A) a copolymer containing a polymerizable group, said copolymer having a polyester structure and a polyether structure,
(B) an oil phase component that does not dissolve in the component (A),
(C) a surfactant, and
(D) a polymerization initiator.

Advantageous Effect of Invention

The copolymer of the present invention contains polyester structures which are degradable functional groups (units), and their crosslinked structures will be broken in the presence of water, and therefore the copolymer has degradability. Particularly, of these polyester structures, a comonomer having a poly-ε-caprolactone structure as a microbial recognition skeleton can also be expected to possess an environmental degradability, the comonomer can be

used in various types of fields, particularly not only for producing the elastomer spherical particles but also as alternatives to various types of organic resins/plastics or as a novel resin/plastic material.

Further, the elastomer spherical particle of the present invention contains a polyester structure in the particle as a degradable functional group (unit), and its crosslinked structure will be broken in a presence of water and therefore the particle has degradability. Particularly, as the polyester structure in the particles, a particle having a poly(ε-caprolactone) structure which is a microbial recognition skeleton can also be expected to possess an environmental degradability of elastomer spherical particle.

The elastomer spherical particle of the present invention is a degradable particle and therefore is expected as an environmental load-reducing material.

Brief Description of Drawings

FIG. 1 is an SEM photomicrograph of the elastomer spherical particles obtained in Working Example 1
FIGs. 2A and 2B are SEM photomicrographs of the elastomer spherical particles obtained in Working Example 5, where FIG. 2A is a photograph at a magnification of 200 times, and FIG. 2B is a photograph at a magnification of 1,000 times.

Description of Embodiments

The present invention will be described in detail hereunder.

[Copolymer]

The copolymer of the present invention is a polyester-polyether copolymer that has at least two radical polymerizable unsaturated groups per molecule and is represented by the following general formula (1) or (2).

[Chem. 9]

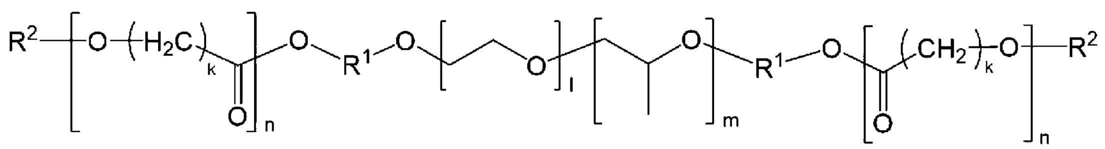

- (1)

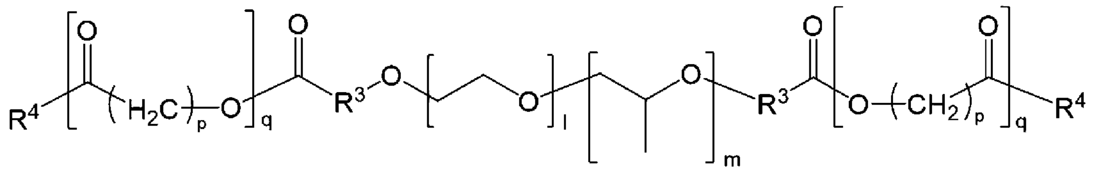

- (2)

In the general formula (1), each $R^1$ independently represents a divalent hydrocarbon group having 1 to 10 carbon atoms, each $R^2$ independently represents a radically polymerizable functional group-containing organic group represented by the following general formula (3a), (3b), or (3c), each k independently represents a number that satisfies $1 \leq k \leqq 10$, 1 is a number that satisfies $1 \leq 1 \leq 1{,}000$, m is a number that satisfies $1 \leq m \leq 1{,}000$, each n independently represents a number that satisfies $1 \leq n \leqq 100$.

In the general formula (2), each R3 independently represents a divalent hydrocarbon group having 1 to 10 carbon atoms, each $R^4$ independently represents a radically polymerizable functional group-containing organic group represented by the following general formula (4a) or (4b), each p independently represents a number that satisfies $1 \leq p \leqq 10$, 1 is a number that satisfies $1 \leq 1 \leq 1{,}000$, m is a number that satisfies $1 \leq m \leq 1{,}000$, each q independently represents a number that satisfies $1 \leq q \leq 100$.

[Chem. 10]

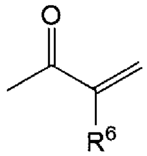

- (3a)

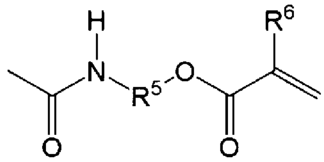

- (3b)

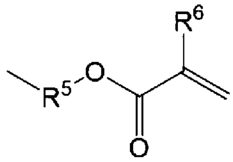

- (3c)

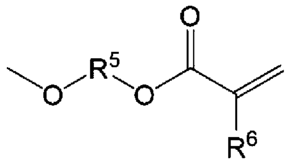

- (4a)

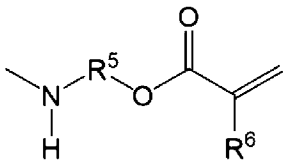

- (4b)

In the general formulae (3a), (3b), (3c), (4a), and (4b), each $R^5$ independently represents a divalent hydrocarbon group having 1 to 8 carbon atoms, each $R^6$ independently represents a hydrogen atom or a hydrocarbon group having 1 to 3 carbon atoms.

Examples of $R^1$ include alkylene groups such as a methylene group, an ethylene group, a propylene group, a trimethylene group, a tetramethylene group, a pentamethylene group, a hexamethylene group, a heptamethylene group, and an octamethylene group, and preferable examples thereof include a methylene group, an ethylene group, a trimethylene group, and a tetramethylene group.

Examples of $R^3$ include alkylene groups such as a methylene group, an ethylene group, a propylene group, a trimethylene group, a tetramethylene group, a pentamethylene group, a hexamethylene group, a heptamethylene group, and an octamethylene group, and preferable examples thereof include a methylene group, an ethylene group, a trimethylene group, and a tetramethylene group.

$R^2$ is a radically polymerizable functional group-containing organic group represented by the general formula (3a), (3b), or (3c), and $R^4$ represents a radically polymerizable functional group-containing organic group represented by the general formula (4a) or (4b).

In the general formulae (3b), (3c), (4a), and (4b), examples of $R^5$ include alkylene groups such as a methylene group, an ethylene group, a propylene group, a trimethylene group, a tetramethylene group, a pentamethylene group, a hexamethylene group, a heptamethylene group, and an octamethylene group, and preferable examples thereof include a methylene group, an ethylene group, a trimethylene group, and a tetramethylene group.

In the general formulae (3a), (3b), (3c), (4a), and (4b), examples of the hydrocarbon group having 1 to 3 carbon atoms represented by $R^6$ includes alkyl groups having 1 to 3 carbon atoms such as a methyl group, an ethyl group, and a propyl group.

$R^6$ is preferably a hydrogen atom or a methyl group.

These radically polymerizable functional group-containing organic groups represented by the general formulae (3a), (3b), (3c), (4a), and (4b) are residues induced from polymerizable monomers, and specific examples of such monomers include a hydroxyl group-containing (meth)acrylic acid ester and an isocyanate group-containing (meth)acrylic acid ester.

Examples of the hydroxyl group-containing (meth)acrylic acid ester include, for example, hydroxyalkyl esters of (meth)acrylic acid having 2 to 8 carbon atoms, such as hydroxyethyl (meth)acrylic acid ester and hydroxypropyl (meth)acrylic acid ester; and carboxy (meth)acrylates, such as carboxyethyl acrylate, (meth)acryloyloxyethyl succinate, and (meth)acryloyloxyethyl phthalate.

Examples of the isocyanate group-containing acrylic acid ester include, for example, isocyanate ethyl (meth) acrylate, isocyanate propyl (meth)acrylate, isocyanate butyl (meth)acrylate, and isocyanate hexyl (meth)acrylate.

Each k in the formula (1) independently represents a number that satisfies $1 \leq k \leq 10$, preferably $1 \leq k \leq 6$.

Each p in the formula (2) independently represents a number that satisfies $1 \leq p \leq 10$, preferably $1 \leq p \leq 6$.

In addition, each n in the formula (1) independently represents a number that satisfies $1 \leq n \leq 100$, preferably $1 \leq n \leq 30$, more preferably $2 \leq n \leq 10$.

Each q in the formula (2) independently represents a number that satisfies $1 \leq q \leq 100$, preferably $1 \leq q \leq 30$, more preferably $2 \leq q \leq 10$.

The values of n and q that are excessively large enhances crystallizability of the polymer due to intra-/intermolecular interactions of the polymer caused by the ester bonding sites, which may affect the handleability in the emulsification step described below.

In the general formula (1), 1 is a number that satisfies $1 \leq 1 \leq 1{,}000$, preferably $2 \leq 1 \leq 100$.

In the general formula (1), m is a number that satisfies $1 \leq m \leq 1{,}000$, preferably $10 \leq m \leq 500$.

In the general formula (2), 1 is a number that satisfies $1 \leq 1 \leq 1{,}000$, preferably $2 \leq 1 \leq 100$.

In the general formula (2), m is a number that satisfies $1 \leq m \leq 1{,}000$, preferably $10 \leq m \leq 500$.

It is preferred in terms of, for example, handleability of the raw material and ease of manufacturing that the copolymer of the present invention be a copolymer represented by the following general formula (5):

[Chem. 11]

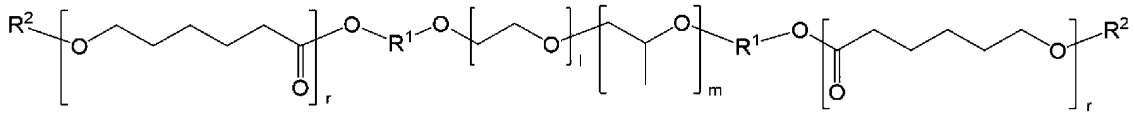

- (5)

wherein, in the general formula (5), each $R^1$ independently represents a divalent hydrocarbon group having 1 to 10 carbon atoms, 1 is a number that satisfies $1 \leq 1 \leq 1{,}000$, m is a number that satisfies $1 \leq m \leq 1{,}000$, each r independently represents a number that satisfies $1 \leq r \leq 100$, and each $R^2$ independently represents a radically polymerizable functional group-containing organic group represented by the following general formula (3a), (3b), or (3c):

[Chem. 12]

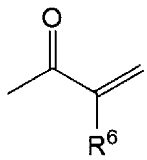

- (3a)

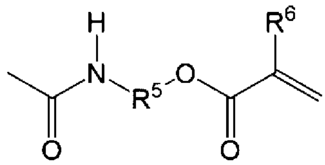

- (3b)

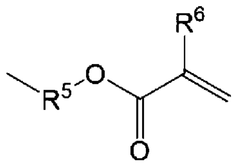

- (3c)

wherein, in the general formulae (3a), (3b), and (3c), each $R^5$ independently represents a divalent hydrocarbon group having 1 to 8 carbon atoms, each $R^6$ independently represents a hydrogen atom or a hydrocarbon group having 1 to 3 carbon atoms.

The copolymer of the present invention may be produced, for example, by the method described below.

[Elastomer spherical particle]

The elastomer spherical particles of the present invention each consists of a polymer containing a structural unit originated from a copolymer having a polyester structure and a polyether structure.

The elastomer spherical particle of the present invention preferably has a spherical shape. The term "spherical" as used herein not only refers to a state where the particle shape is a true sphere, but also encompasses a state where the particle has a deformed ellipsoidal shape whose aspect ratio (length of major axis/length of minor axis) is normally 1 to 4, preferably 1 to 2, more preferably 1 to 1.6, even more preferably 1 to 1.4, on average. As explained below, a copolymer having polyester and polyether structures that is emulsified and dispersed into a continuous phase using, for example, a surfactant after which the dispersion is crosslinked results in particles having spherical shapes. The shape of the elastomer spherical particles can be confirmed by conducting observation using, for example, an optical microscope or an electron microscope; and the aspect ratio is a value calculated as an average value after measuring the respective lengths of the major and minor axes of any 50 particles taken from a micrograph.

The elastomer spherical particles of the present invention have a volume-average particle diameter in a range of 0.5 to 200 μm, preferably of 1 to 100 μm. A volume average particle diameter larger than the above-mentioned upper limit will result in a deteriorated smoothness as particles, or may lead to a feeling of roughness, and optical diffusion properties will also be decreased as well. A volume average particle diameter smaller than the above-mentioned lower limit will reduce the fluidity of the particles and enhances their aggregability, which prevents smoothness or optical diffusion properties from sufficiently being imparted and is therefore unpreferable.

The volume average particle diameter of the elastomer spherical particles as used herein refers to a value that is measured as follows. First, prior to measuring the volume average particle diameter, the particle diameters of 50 randomly selected particles are measured based on a micrograph of the elastomer spherical particles to determine whether the average value is smaller than 1 μm or equal to or larger than 1 μm. The measurement is performed using a dispersion liquid in which elastomer spherical particles are re-dispersed in water with the respective types of surfactants, and the volume average particle diameter, determined as equal to or larger than 1 μm, is a value measured by the electrical resistance method, while a volume average particle diameter, determined as smaller than 1 μm, is a value measured by the laser diffraction/scattering method.

It is preferred that a rubber (elastomer) as a component of the elastomer spherical particles have no tackiness or stickiness. It is preferred that the rubber have a rubber hardness in a range of 5 to 90, more preferably of 10 to 80 when measured by a type A durometer as stipulated in JIS K6253. It is also preferred that the rubber have a rubber hardness in a range of 5 to 90, more preferably of 20 to 85, even more preferably of 40 to 85, when measured by ASKER Durometer Type C as prescribed in The Society of Rubber Industry, Japan Standard (SRIS).

A rubber hardness lower than 5 may result in a higher agglomeration property and reduce dispersibility. Further, a rubber hardness exceeding 90 may deteriorate the soft texture, and is therefore unpreferable.

It is preferred that the elastomer spherical particle of the present invention be the one formed by polymerizing polyester-polyether copolymers each having at least two radical polymerizable unsaturated groups per molecule.

It is preferred that the polyester-polyether copolymer having at least two radical polymerizable unsaturated groups per molecule be a copolymer represented by the following general formula (1) or (2):

[Chem. 13]

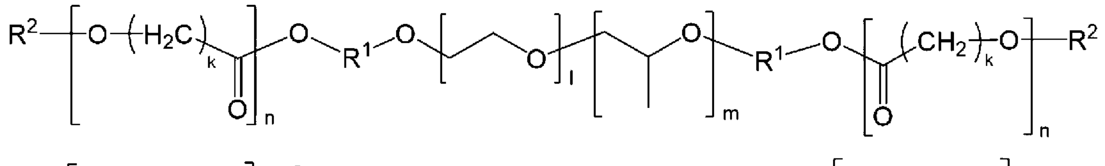

- (1)

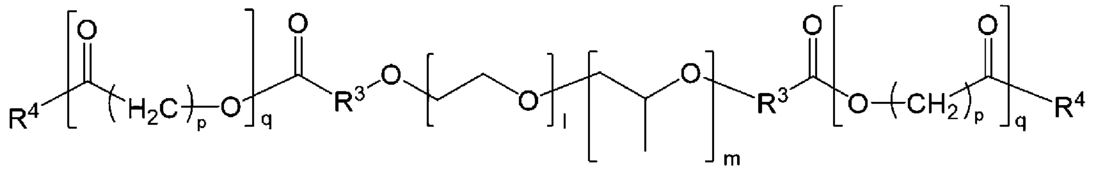

- (2)

wherein, in the general formula (1), each $R^1$ independently represents a divalent hydrocarbon group having 1 to 10 carbon atoms, each $R^2$ independently represents a radically polymerizable functional group-containing organic group represented by the following general formula (3a), (3b), or (3c), each k independently represents a number that satisfies $1 \leq k \leqq 10$, 1 is a number that satisfies $1 \leq 1 \leq 1{,}000$, m is a number that satisfies $1 \leq m \leq 1{,}000$, each n

independently represents a number that satisfies 1 ≤ n ≦100, and
wherein, in the general formula (2), each $R^3$ independently represents a divalent hydrocarbon group having 1 to 10 carbon atoms, each $R^4$ independently represents a radically polymerizable functional group-containing organic group represented by the following general formula (4a) or (4b), each p independently represents a number that satisfies 1 ≤ p ≦ 10, 1 is a number that satisfies 1 ≤ 1 ≤ 1,000, m is a number that satisfies 1 ≤ m ≤ 1,000, each q independently represents a number that satisfies 1 ≤ q ≤ 100,

[Chem. 14]

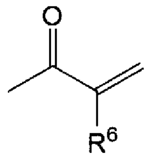
- (3a)

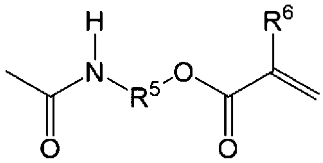
- (3b)

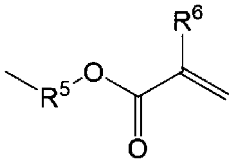
- (3c)

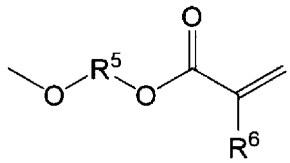
- (4a)

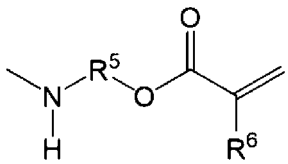
- (4b)

wherein, in the general formulae (3a), (3b), (3c), (4a), and (4b), each $R^5$ independently represents a divalent hydrocarbon group having 1 to 8 carbon atoms, each $R^6$ independently represents a hydrogen atom or a hydrocarbon group having 1 to 3 carbon atoms.

Examples of $R^1$ include alkylene groups such as a methylene group, an ethylene group, a propylene group, a trimethylene group, a tetramethylene group, a pentamethylene group, a hexamethylene group, a heptamethylene group, and an octamethylene group, and preferable examples thereof include a methylene group, an ethylene group, a trimethylene group, and a tetramethylene group.

Examples of $R^3$ include alkylene groups such as a methylene group, an ethylene group, a propylene group, a trimethylene group, a tetramethylene group, a pentamethylene group, a hexamethylene group, a heptamethylene group, and an octamethylene group, and preferable examples thereof include a methylene group, an ethylene group, a trimethylene group, and a tetramethylene group.

$R^2$ is a radically polymerizable functional group-containing organic group represented by the general formula (3a), (3b), or (3c), $R^4$ is a radically polymerizable functional group-containing organic group represented by the general formula (4a) or (4b).

Examples of $R^5$ in the general formulae (3b), (3c), (4a), and (4b) include alkylene groups such as a methylene group, an ethylene group, a propylene group, a trimethylene group, a tetramethylene group, a pentamethylene group, a hexamethylene group, a heptamethylene group, and an octamethylene group, and preferable examples thereof include a methylene group, an ethylene group, a trimethylene group, and a tetramethylene group.

In the general formulae (3a), (3b), (3c), (4a), and (4b), examples of the hydrocarbon group having 1 to 3 carbon

atoms represented by $R^6$ includes alkyl groups having 1 to 3 carbon atoms such as a methyl, an ethyl group, and a propyl group. It is preferred that $R^6$ be a hydrogen atom or a methyl group.

These radically polymerizable functional group-containing organic groups represented by the general formulae (3a), (3b), (3c), (4a), and (4b) are residues induced from polymerizable monomers, and specific examples of such monomers include a hydroxyl group-containing (meth)acrylic acid ester and an isocyanate group-containing (meth)acrylic acid ester.

Examples of the hydroxyl group-containing (meth)acrylic acid ester include, for example, hydroxyalkyl esters of (meth)acrylic acid having 2 to 8 carbon atoms, such as hydroxyethyl (meth)acrylic acid ester and hydroxypropyl (meth)acrylic acid ester; and carboxy (meth)acrylates, such as carboxyethyl acrylate, (meth)acryloyloxyethyl succinate, and (meth)acryloyloxyethyl phthalate.

Examples of the isocyanate group-containing acrylic acid ester include, for example, isocyanate ethyl (meth)acrylate, isocyanate propyl (meth)acrylate, isocyanate butyl (meth)acrylate, and isocyanate hexyl (meth)acrylate.

The polyester-polyether copolymer having at least two radical polymerizable unsaturated groups per molecule preferably has a polyester structure of an aliphatic polyester which is considered to have high degradability.

Examples of such aliphatic polyester include, for example, poly-ε-caprolactone, poly-β-propiolactone, γ-butyrolactone, polylactic acid, polyhydroxybutyrate, polyglycolic acid, polyethylene adipate, polyhydroxybutyric acid, polyethylene succinate, and polybutylene succinate, and it is particularly preferred in terms of degradability and ease of handleability that the structure be of poly-ε-caprolactone.

Each k in the formula (1) independently represents a number that satisfies $1 \leq k \leq 10$, preferably $1 \leq k \leq 6$.

Each p in the formula (2) independently represents a number that satisfies $1 \leq p \leq 10$, preferably $1 \leq p \leq 6$.

In addition, each n in the formula (1) independently represents a number that satisfies $1 \leq n \leq 100$, preferably $1 \leq n \leq 30$, more preferably $2 \leq n \leq 10$.

Each q in the formula (2) independently represents a number that satisfies $1 \leq q \leq 100$, preferably $1 \leq q \leq 30$, more preferably $2 \leq q \leq 10$.

Excessively large values of n and q may result in an enhanced crystallizability by intermolecular interaction/intramolecular interaction via ester bonding sites in the polymer, which may affect the handleability in, for example, the subsequent emulsification step described below.

In the general formula (1), 1 is a number that satisfies $1 \leq 1 \leq 1{,}000$, preferably $2 \leq 1 \leq 100$.

**In** the general formula (1), m is a number that satisfies $1 \leq m \leq 1{,}000$, preferably $10 \leq m \leq 500$.

In the general formula (2), 1 is a number that satisfies $1 \leq 1 \leq 1{,}000$, preferably $2 \leq 1 \leq 100$.

In the general formula (2), m is a number that satisfies $1 \leq m \leq 1{,}000$, preferably $10 \leq m \leq 500$.

It is preferred in terms of, for example, handleability of the raw material and ease of manufacturing that the polyester-polyether copolymer having at least two radical polymerizable unsaturated groups per molecule be a copolymer represented by the following general formula (5) or (6):

[Chem. 15]

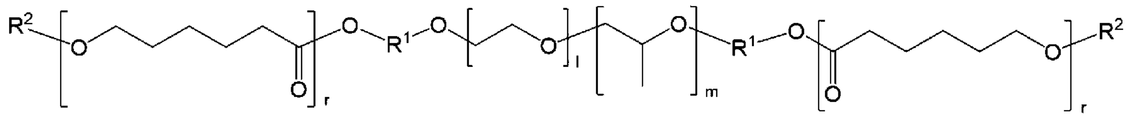

- (5)

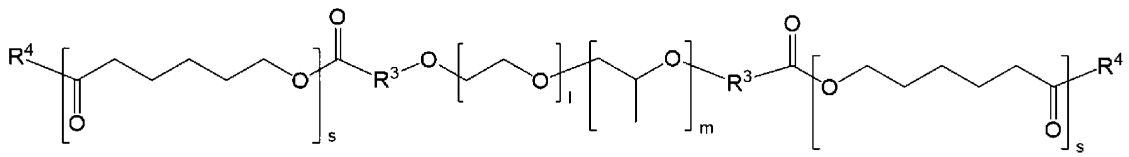

- (6)

wherein, in the general formula (5), each $R^1$ independently represents a divalent hydrocarbon group having 1 to 10 carbon atoms, each $R^2$ independently represents a radically polymerizable functional group-containing organic group represented by the general formula (3a), (3b), or (3c), 1 is a number that satisfies $1 \leq 1 \leq 1{,}000$, m is a number that satisfies $1 \leq m \leq 1{,}000$, each r independently represents a number that satisfies $1 \leq r \leq 100$, and

wherein, in the general formula (6), each $R^3$ independently represents a divalent hydrocarbon group having 1 to 10 carbon atoms, each $R^4$ independently represents a radically polymerizable functional group-containing organic group represented by the general formula (4a) or (4b), 1 is a number that satisfies $1 \leq 1 \leq 1{,}000$, m is a number that satisfies $1 \leq m \leq 1{,}000$, each s independently represents a number that satisfies $1 \leq s \leq 100$)

[Method of Manufacturing Polyester-Polyether Copolymer]

An example method of manufacturing the polyester-polyether copolymer includes a method of introducing a polymerizable monomer having a radically polymerizable unsaturated group via, for example, an ester bond, an ether bond, a urethane bond, or an amide bond to a poly(ε-caprolactone)-modified polyether which is obtained by subjecting a cyclic ε-caprolactone to ring-opening polymerization, where the modified polyether is obtained from, as a starting material, a type of polyether containing an active hydrogen such as a polyether, a carboxy-modified polyether and an amino-modified polyether.

It is preferred in terms of reactivity that each type of polyether have a terminal structure whose reactive functional group is attached on the primary carbon atom.

Examples of the reaction condition for this manufacturing method include, but are not limited to, the manufacturing methods as explained below.

For example, 3 to 4 equivalents of ε-caprolactone (function group equivalents) are added to 1.0 equivalent of polyether, containing an active hydrogen, such as a polyether or a carboxy-modified polyether, to bring about a reaction for 6 hours at 120°C under a conventionally known ring-opening polymerization catalyst to obtain a poly(ε-caprolactone)-modified polyether.

Next, 1.0 to 1.25 equivalents (1.0 to 1.25 moles) of acrylic acid chloride and, if necessary, a reaction catalyst are added per functional group to 1.0 mole of the hydroxyl groups of the resultant poly(ε-caprolactone)-modified polyether, which are then reacted with each other at 40 to 100°C for 4 hours or more. After the reaction is over, the product (crude product) is subjected to a filtration, water washing and/or adsorption step(s) to have a by-product removed and, finally, the solvent distilled away, thus obtaining poly(ε-caprolactone) acrylic-modified polyether (polyester-polyether copolymer).

Examples of the polyester-polyether copolymer) when a polyether is used as a starting material include those represented by the formulae (7a) and (7b) where only one end is represented because the structure is symmetric.

[Chem. 16]

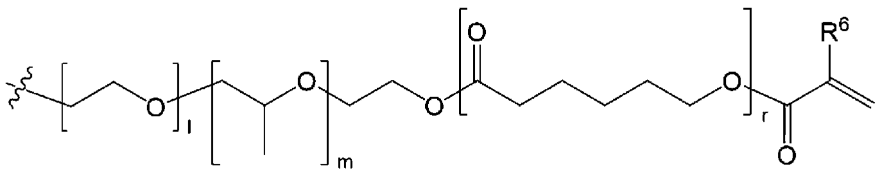

- (7a)

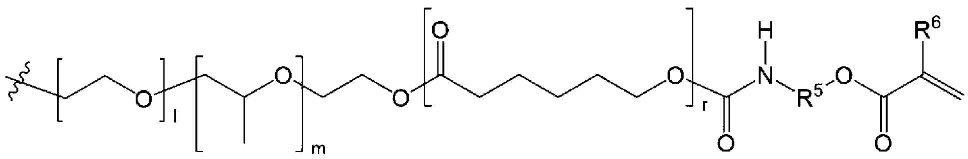

- (7b)

In the formula (7a) and (7b), $R^5$ is a divalent hydrocarbon group having 1 to 8 carbon atoms, $R^6$is a hydrogen atom or a hydrocarbon group having 1 to 3 carbon atoms. 1, m, and r satisfy 1 ≤ 1 ≤ 1,000, 1 ≤ m ≤ 1,000, 1 ≤ r ≤ 30, and preferably satisfy 2 ≤ 1 ≤ 100, 10 ≤ m ≤ 500, 2 ≤ r ≤ 10.

Examples of the polyester-polyether copolymer when a carboxy-modified polyether is used as a starting material include those represented by the formulae (8a) and (8b) where only one end is represented because the structure is symmetric.

[Chem. 17]

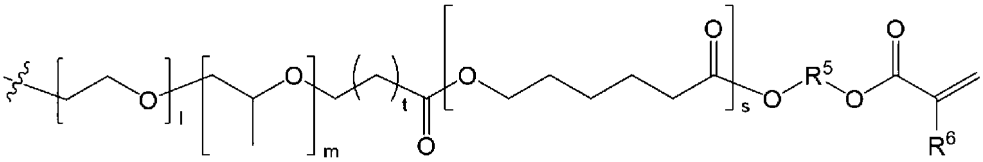

- (8a)

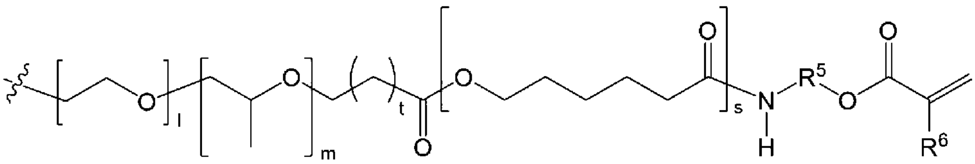

- (8b)

In the formulae (8a) and (8b), $R^5$ is a divalent hydrocarbon group having 1 to 8 carbon atoms and $R^6$ is a hydrogen atom or a hydrocarbon group having 1 to 3 carbon atoms.

In addition, l, m, s, and t satisfy $1 \leq l \leq 1{,}000$, $1 \leq m \leq 1{,}000$, $1 \leq s \leq 30$, $0 \leq t \leq 10$, and preferably satisfy $2 \leq l \leq 100$, $10 \leq m \leq 500$, $2 \leq s \leq 10$, $1 \leq t \leq 10$.

Examples of the polyester-polyether copolymer when an amino-modified polyether is used as a starting material include those represented by the formulae (9a) and (9b) where only one end is represented because the structure is symmetric.

[Chem. 18]

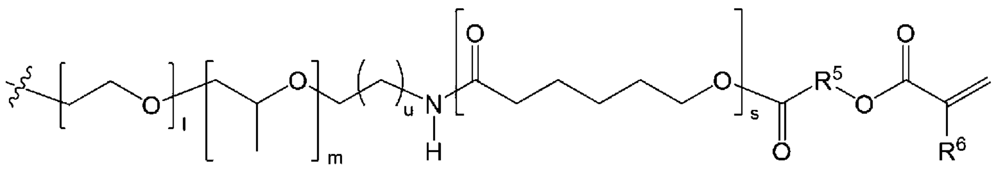

- (9a)

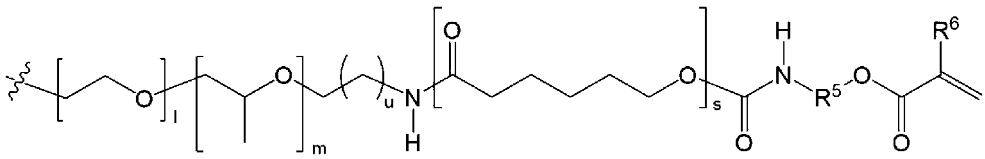

- (9b)

In the formulae (9a) and (9b), $R^5$ is a divalent hydrocarbon group having 1 to 8 carbon atoms, $R^6$ is a hydrogen atom or a hydrocarbon group having 1 to 3 carbon atoms.

In addition, l, m, s, and u satisfy $1 \leq l \leq 1{,}000$, $1 \leq m \leq 1{,}000$, $1 \leq s \leq 30$, $0 \leq u \leq 10$, and preferably satisfy $2 \leq l \leq 100$, $10 \leq m \leq 500$, $2 \leq s \leq 10$, $1 \leq u \leq 10$.

A conventionally known catalyst may be used as a catalyst for subjecting a cyclic ε-caprolactone to ring-opening polymerization but the catalyst is not particularly limited to such.

Specific examples thereof include, for example, organic titanium compounds such as tetramethoxytitanium, tetraethoxytitanium, tetra-n-propoxytitanium, and tetrabutoxytitanium; organic tin compounds such as di-n-butyltin laurate, diisobutyltin oxide, and dibutyltin diacetate; acetate salts of, for example, magnesium, calcium, and zinc; antimony oxide; stannous halides; and perchloric acid.

The amount of the ring-opening polymerization catalyst to be added may be in a range of 10 to 10,000 ppm, preferably of 10 to 1,000 ppm based on the amount of the ε-caprolactone monomer (cyclic ε-caprolactone).

Various catalysts may be used in the method of introducing a polymerizable monomer having a radically polymerizable unsaturated group to a poly(ε-caprolactone)-modified polyether in accordance with the reaction substrate (reactive functional group) of the polymerizable monomer and the skeleton to be formed, and any conventionally known catalysts may be used.

Examples of the (esterification) catalyst for use in the esterification reaction include Lewis acid catalysts such as alcoholates, carboxylates, or chelate compounds of titanium, zirconium, tin, aluminum and zinc, and boron trifluorides and boron trifluoride etherates; acid catalysts such as hydrochloric acid, sulfuric acid, hydrogen bromide, acetic acid, trifluoroacetic acid, methanesulfonic acid and p-toluenesulfonic acid; and amine-based catalysts such as pentamethyldiethylenetriamine (PMDETA), trimethyltriazacyclononane (TMTACN), triethylamine (TEA), 4-(N,N-dimethylamino)pyridine (DMAP), 1,4-diazabicyclo(2.2.2)octane (DABCO) and tetramethylethylenediamine (TMEDA), among which amine-based catalysts are preferable in terms of stability of the products obtained through the esterification reaction and in respect of economical consideration.

When an amine-based catalyst is used, a dehydration-condensation agent may be added to enhance the reaction efficiency. A conventionally known dehydration-condensation agent may be used, and examples of it include, but are not particularly limited to, 1,1'-carbonyldiimidazole (CDI), N,N'-dicyclohexylcarbodiimide (DCC), N,N'-diisopropylcarbodiimide (DIC), 1-ethyl-3-(3-dimethylaminopropyl)-carbodiimide (EDC), 1-ethyl-3-(3-dimethylaminopropyl)-carbodiimide hydrochloride (EDC·HCl) and 1-[bis(dimethylamino)methylene]-1H-1,2,3-triazolo[4, 5-b]pyridinium 3-oxide hexafluorophosphate (HATU).

As catalysts for use in the urethane reaction, there may be used conventionally know catalysts which are not particularly limited.

Specific examples thereof include amines such as triethylamine, triethylenediamine, pentamethylenediethylenetriamine, N,N-dimethylethanolamine, 1,4-diazabicyclo(2,2,2)octane (DABCO), pyridine, and N,N,N',N'-tetramethyl-1,3-propanediamine (TMPDA); organotin compounds such as di-n-butyltin laurate, diisobutyltin oxide, dibutyltin diacetate, and dibutyltin dilaurate (DBTL); organotitanium compounds such as tetramethoxytitanium, tetraethoxytitaniu m, tetra-n-propoxytitanium, tetrabutoxytitanium, titanium tetraacetylacetonate, and titanium diisopropoxybis(ethylacetoacetate); and organic zirconium compounds such as n-propylzirconate, n-butylzirconate, zirconium tetraacetylacetonate, and zirconium dibutoxybis(ethylacetoacetate).

The amount of the catalyst to be added for introducing a polymerizable monomer having a radically polymerizable unsaturated group may be in a range of 10 to 10,000 ppm, preferably 10 to 1,000 ppm based on the total amount of the polymerizable monomer.

During the reaction, a polymerization inhibitor or antioxidant may be used for inhibiting the polymerization reaction of the (meth)acrylate group in progress. Specific examples of the polymerization inhibitor or antioxidant include, but are not limited to, hydroquinone, p-methoxyphenol, 2,6-di-tert-butyl-p-cresol, 2,4-dimethyl-6-t-butylphenol, p-benzoquinone, and 2,5-dihydroxy-p-benzoquinone.

An example method for manufacturing the polyester-polyether copolymer includes a method of esterizing the above-listed carboxy-modified polyether with the poly(ε-caprolactone)-modified (meth)acrylate as shown in the following formula (10).

Examples of the poly(ε-caprolactone)-modified (meth)acrylate that are commercially available include, for example, PLACCEL FA2D, PLACCEL FA10L, PLACCEL FM2D and PLACCEL FM4 (which are all manufactured by Daicel Corporation).

[Chem. 19]

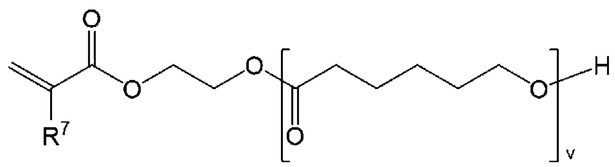

- (10)

In the formula (10), $R^7$ is a hydrogen atom or a monovalent hydrocarbon group having 1 to 3 carbon atoms, preferably a hydrogen atom or a methyl group. v satisfies $1 \leq v \leq 30$, preferably $1 \leq v \leq 10$.

Examples of the above-mentioned manufacturing method includes the manufacturing methods as described below which are not particularly limited.

1.0 to 1.25 mol of hydroxyl group equivalents of the poly(ε-caprolactone)-modified (meth)acrylate (of the formula (10)) and 0.1 to 5.0 mol of an esterification catalyst are mixed with 1.0 mol of carboxy groups in the carboxy-modified polyether, which is then stirred at 15 to 150°C for 10 to 30 minutes. A dehydration-condensation agent may optionally be added thereinto in an amount of 1.0 to 1.25 mol to bring about a reaction for 4 to 20 hours at 15 to 150°C.

After the reaction is over, the reaction product is subjected to a filtration, water washing and adsorption treatment steps to have a by-product removed and the solvent distilled away, thus obtaining a polyester-polyether copolymer.

It is preferred that the polyester-polyether copolymer be a liquid and have a weight-average molecular weight (MW.) of 100 to 100,000, more preferably 300 to 10,000 when measured by gel permeation chromatography (GPC).

A weight-average molecular weight smaller than 100 may lead to a poor degradability of the resultant elastomer spherical particles, while a molecular weight larger than 10,000 may make it difficult to prepare the elastomer spherical particles.

A dilution treatment may be carried out in the filtration step using a hydrophobic organic solvent to adjust the viscosity of the reaction product.

Preferable examples of the hydrophobic organic solvent for use therein include, but are not particularly limited to, toluene, hexane and ethyl acetate in terms of solubility/affinity.

The adsorption treatment step is a step for the purposes of removing hydrochloride that cannot be completely

removed via water washing, and performing dewatering, deodorizing and decoloring.

A conventionally known adsorbent material may be used in the adsorption treatment step, and a multiple of adsorbent materials may be used in combination. As such adsorbent materials, preferred are a desiccant of, for example, magnesium sulfate or sodium sulfate; an activated carbon; and the KYOWAAD series (by Kyowa Chemical Industry Co., Ltd.).

[Dispersion liquid of elastomer spherical particles]

The dispersion liquid of elastomer spherical particles according to present invention is prepared by dispersing the elastomer spherical particles, as explained above, into at least one type of dispersion medium selected from a silicone oil, a hydrocarbon oil, a higher fatty acid, an ester oil, a liquid oil, and water.

Examples of the dispersion medium include a silicone oil, a hydrocarbon oil, a higher fatty acid, an ester oil, a liquid oil, and water, and preferable examples of which include a silicone oil, a hydrocarbon oil, an ester oil, and water. Particularly preferred are dimethylpolysiloxane, decamethylcyclopentasiloxane, liquid paraffin, isododecane, squalane, stearic acid, oleic acid, butyl stearate, decyl oleate, distilled water, ion-exchanged water, and pure water.

The amount of the elastomer spherical particles in the dispersion liquid is preferably in a range of 5 to 80% by mass, more preferably 20 to 70% by mass, based on the total mass of the dispersion liquid. An amount of the elastomer spherical particles less than the above-mentioned lower limit reduces productivity per the number of elastomer particles, and thus is inefficient and unpreferable. Meanwhile, an amount of the elastomer spherical particles larger than the above-mentioned upper limit enhances viscosity of the dispersion liquid, which makes the liquid difficult to be handles and therefore is unpreferable.

[Method for producing elastomer spherical particles and dispersion liquid of elastomer spherical particles]

The elastomer spherical particles of the present invention can be produced, for example, by a method including the following steps (i) to (iii). The dispersion liquid of the elastomer spherical particles of the present invention can be produced by a method including the steps (i) and (ii). Said steps being the steps of

(i) preparing an O/O type or O/W type emulsion by stirring and emulsifying the components of

(A) a copolymer containing a polymerizable group, said copolymer having a polyester structure and a polyether structure,
(B) an oil or aqueous phase component that does not dissolve in the component (A),
(C) a surfactant, and
(D) a polymerization initiator;

(ii) polymerizing the component (A) in the O/O type or O/W type emulsion obtained in the step (i) to obtain a dispersion liquid of elastomer spherical particles; and
(iii) washing, drying and removing the component (B), as continuous phase, from the dispersion liquid of elastomer spherical particles obtained in the step (ii).

Step (i)

The components to be used in the step (i) will be explained below.

As the component (A) of polymerizable group-containing copolymer having polyester and polyether structures, there may be used the copolymer, having a polymerizable group and containing a polyester structure and a polyether structure, that is contained as a structural unit of the elastomer spherical particle of the present invention, and the above-mentioned polyester-polyether copolymer having at least two radical polymerizable unsaturated groups per molecule may be preferably used. Specific examples of the component (A) include a polyester-polyether copolymer represented by the general formula (1) or (2), and more preferable examples thereof include a polyester-polyether copolymer represented by the general formula (5) or (6).

The component (B) is a component of continuous phase of the emulsion and is an oil phase component that does not dissolve in (is insoluble/immiscible) or have low affinity with the component (A) or is an aqueous phase component.

Examples of the oil phase component of the component (B) include, but are not limited to, a silicone oil, a hydrocarbon oil, a higher fatty acid, an ester oil, and a liquid oil. They may be used alone or in appropriate combination of two or more types.

Examples of the silicone oil include, for example, dimethylpolysiloxane, methylhydrogenpolysiloxane, methylphenylpolysiloxane, octamethylsiloxane, decamethyltetrasiloxane, decamethylcyclopentasiloxane, hexamethylcyclotrisiloxane, and octamethylcyclotetrasiloxane.

Examples of the hydrocarbon oil include, for example, a liquid paraffin, α-olefin oligomer, isododecane, isohexadecane, squalane, ozokerite, squalene, ceresin, paraffin, paraffin wax, polyethylene wax, polyethylene-polypropylene wax, pristane, polyisobutylene, petrolatum, and microcrystalline wax.

Examples of the higher fatty acid include, for example, lauric acid, myristic acid, palmitic acid, stearic acid, behenic acid, undecylenic acid, oleic acid, linoleic acid, linolenic acid, arachidonic acid, eicosapentaenoic acid (EPA), docosahexaenoic acid (DHA), isostearic acid, and 12-hydroxystearic acid.

Examples of the ester oil include, for example, isopropyl myristate, cetyl octanoate, octyldodecyl myristate, isopropyl palmitate, butyl stearate, hexyl laurate, myristyl myristate, decyl oleate, hexyldecyl dimethyloctanoate, cetyl lactate, myristyl lactate, lanolin acetate, isocetyl stearate, isocetyl isostearate, isononyl isononanoate, cholesteryl 12-hydroxystearate, ethylene glycol di-2-ethylhexanoate, dipentaerythritol fatty acid ester, N-alkyl glycol monoisostearate, neopentyl glycol dicaprate, diisostearyl malate, glycerin di-2-heptylundecanoate, trimethylolpropane tri-2-ethylhexanoate, trimethylolpropane triisostearate, pentaerythritol tetra-2-ethylhexanoate, glycerin tri-2-ethylhexanoate, glycerin trioctanoate, glycerin triisopalmitate, trimethylolpropane triisostearate, cetyl 2-ethylhexanoate, 2-ethylhexyl palmitate, glycerin trimyristate, tri-2-heptylundecanoate glyceride, castor oil fatty acid methyl ester, oleyl oleate, acetoglyceride, 2-heptylundecyl palmitate, diisobutyl adipate, N-lauroyl-L-glutamic acid-2-octyldodecyl ester, di-2-heptylundecyl adipate, ethyl laurate, di-2-ethylhexyl sebacate, 2-hexyldecyl myristate, 2-hexyldecyl palmitate, 2-hexyldecyl adipate, diisopropyl sebacate, 2-ethylhexyl succinate, and triethyl citrate.

Examples of the liquid oil include, for example, an avocado oil, camellia oil, turtle oil, macadamia nut oil, corn oil, mink oil, olive oil, rapeseed oil, egg yolk oil, sesame oil, apricot kernel oil, wheat germ oil, sasanqua oil, castor oil, linseed oil, safflower oil, cottonseed oil, perilla oil, soybean oil, peanut oil, tea seed oil, kaya oil, rice bran oil, Chinese tung oil, Japanese tung oil, jojoba oil, germ oil, and triglyceride.

It is preferred that the component (B) has a kinetic viscosity at 25°C of 100,000 $mm^2/s$ or less, more preferably of 10,000 $mm^2/s$ or less. A kinetic viscosity higher than the above-mentioned upper limit may make the emulsification difficult in the step (i) or make it difficult to obtain fine spherical particles with a narrow particle diameter distribution.

When an aqueous phase component is used as the component (B), examples of the aqueous phase component of the component (B) include a distilled water, an ion-exchanged water, a pure water, and an ultrapure water.

Examples of the surfactant of the component (C) include, but are not particularly limited to, a non-ionic surfactant, an anionic surfactant, a cationic surfactant, and an amphoteric surfactant. They may be used alone or in appropriate combination of two or more.

Examples of the non-ionic surfactant include, for example, a polyoxyethylene alkyl ether, polyoxyethylene polyoxypropylene alkyl ether, polyoxyethylene alkylphenyl ether, polyethylene glycol fatty acid ester, sorbitan fatty acid ester, polyoxyethylene sorbitan fatty acid ester, polyoxyethylene sorbitol fatty acid ester, glycerin fatty acid ester, polyoxyethylene glycerin fatty acid ester, polyglycerin fatty acid ester, propylene glycol fatty acid ester, polyoxyethylene castor oil, polyoxyethylene hydrogenated castor oil, polyoxyethylene hydrogenated castor oil fatty acid ester, polyoxyethylene alkylamine, polyoxyethylene fatty acid amide, polyoxyethylene-modified organopolysiloxane, and polyoxyethylene-polyoxypropylene-modified organopolysiloxane.

Examples of the polyoxyethylene-modified organopolysiloxane include, for example, linear-type polyether-modified silicones (Product names: KF-6015, KF-6017, and KF-6017P manufactured by Shin-Etsu Chemical Co., Ltd.), a linear-type polyether/alkyl co-modified silicone (Product name: KF-6048 manufactured by Shin-Etsu Chemical Co., Ltd), a branched-type polyether-modified silicones (Product names: KF-6028 and KF-6028P manufactured by Shin-Etsu Chemical Co., Ltd) and a branched-type polyether/alkyl co-modified silicone (Product name: KF-6038 manufactured by Shin-Etsu Chemical Co., Ltd).

Examples of the anionic surfactant include, for example, an alkyl sulfate ester salt such as sodium lauryl sulfate, a polyoxyethylene alkyl ether sulfate ester salt, a polyoxyethylene alkylphenyl ether sulfate ester salt, an alkylbenzene sulfonate salt, a polyoxyethylene alkylphenyl ether sulfonate salt, an alkyldiphenyl ether disulfonate salt, an alkanesulfonate salt, a N-acyltaurate salt, a dialkyl sulfosuccinate salt, a monoalkyl sulfosuccinate salt, a polyoxyethylene alkyl ether sulfosuccinate salt, a fatty acid salt, a polyoxyethylene alkyl ether carboxylate salt, a N-acylamino acid salt, a monoalkyl phosphate ester salt, a dialkyl phosphate ester salt, and a polyoxyethylene alkyl ether phosphate ester salt.

Examples of the cationic surfactant include, for example, an alkyltrimethylammonium salt, a dialkyldimethylammonium salt, a polyoxyethylene alkyldimethylammonium salt, a dipolyoxyethylene alkylmethylammonium salt, a tripolyoxyethylene alkylammonium salt, an alkylbenzyl dimethylammonium salt, an alkylpyridium salt, a monoalkylamine salt, and a monoalkyl amidoamine salt.

Examples of the amphoteric surfactant include, for example, an alkyldimethylamine oxide, an alkyldimethylcarboxybetaine, an alkylamidopropyl dimethylcarboxybetaine, an alkylhydroxysulfobetaine, and an alkylcarboxymethylhydroxyethyl imidazolinium betaine.

It is preferred that the surfactant be a non-ionic or anionic surfactant due to the fact that the aforementioned oil phase components can be emulsified with a small amount of such surfactant, and that fine particles can be obtained

thereby.

It is preferred that the surfactant (C) have an HLB of 2.0 to 18.0 when an oil phase component is used as the component (B).

It is preferred that the surfactant (C) have an HLB of 6.0 to 18.0, more preferably of 9.0 to 18.0, when an aqueous phase component is used as the component (B).

The surfactant is preferably added in an amount of 0.01 to 25 parts by mass, more preferably 0.05 to 15 parts by mass, per 100 parts by mass of the emulsion. An amount of the surfactant smaller than 0.01 parts by mass may result in an insufficient emulsification or prevent fine particles from being obtained. The amount of the surfactant greater than 25 parts by mass may fail to obtain fine particles or cause the elastomer spherical particles to have insufficient dispersibility.

The amount of the component (A) in the emulsion is preferably 1.0 to 80 parts by mass, and more preferably 10 to 60 parts by mass, per 100 parts by mass of the emulsion. An amount of the component (A) less than 1.0 parts by mass may be disadvantageous in terms of production efficiency, while the amount larger than 80 parts by mass may make it difficult to obtain elastomer spherical particles in the form of dispersion liquid.

The polymerization initiator to be used as the component (D) may be a normal radical polymerization initiator, and there may be used, for example, a method of thermal polymerization, redox polymerization, or photopolymerization for the curing/reaction.

Examples of these polymerization initiators used therein include, for example, peroxides, azo initiators, redox initiators having a combination of an oxidizing agent and a reducing agent, or photopolymerization initiators.

Examples of the peroxides include, for example, benzoyl peroxide, 2,4-dichlorobenzoyl peroxide, o-methylbenzoyl peroxide, p-methylbenzoyl peroxide, 2,4-dicumyl peroxide, 2,5-dimethyl-2,5-di(t-butylperoxy)hexane, di-t-butylperoxide, t-butylperbenzoate, and hydrogen peroxide.

The peroxides may be a perchlorate such as potassium perchlorate or sodium perchlorate.

Examples of the azo initiators include, for example, 2,2'-azobisisobutyronitrile, 2,2'-azobis(2-methylbutyronitrile), 2,2'-azobis(2,4-dimethylvaleronitrile), dimethyl-2,2'-azobis(2-methylpropionate), dimethyl-2,2'-azobisisobutyrate, t-butylperoxy-2-ethyl hexanoate, and 2,2'-azobis(2-amidinopropane) dihydrochloride.

Examples of the redox initiators include, for example, a combination of ferrous sulfate, sodium pyrophosphate, glucose, and hydroperoxide; and a combination of ferrous sulfate, disodium ethylenediaminetetraacetate, Rongalite, and hydroperoxide. A combination of thermal initiator and photopolymerization initiator may also be used.

Examples of the photopolymerization initiators include, for example, 2,2-diethoxyacetophenone, 2,2-dimethoxy-1,2-diphenylethan-1-one, 1-hydroxy-cyclohexylphenyl-ketone, 2-hydroxy-2-methyl-1-phenyl-propan-1-one, 2-hydroxy-1-{4-[4-(2-hydroxy-2-methyl-propionyl)-benzyl]-phenyl }-2-methyl-propan-1-one, phenyl glyoxylic acid methyl ester, 2-methyl-1-[4-(methylthio)phenyl]-2-morpholinopropan-1-one, 2-benzyl-2-dimethylamino-1-(4-morpholinophenyl)-1-butanone, bis(2,4,6-trimethylbenzoyl)-phenylphosphine oxide, and 2,4,6-trimethylbenzoyl-diphenylphosphine oxide.

Benzoin alkyl ethers such as benzoin methyl ether, benzoin ethyl ether, benzoin isopropyl ether, and benzoin isobutyl ether may also be used therefor.

Of the above-mentioned polymerization initiators, in terms of, for example, stability during the polymerization reaction of the emulsion, preferred are peroxides, azo initiators, and photopolymerization initiators for use in the thermal polymerization method or the photopolymerization method.

The amount of the polymerization initiator added is preferably within the range of 0.01 to 5.0 parts by mass based on 100 parts by mass of the component (A). If the added amount of the polymerization initiator is less than 0.01 parts by mass, curability may be insufficient, and if the amount is more than 5.0 parts by mass, odor or bleeding may occur due to, for example, the reaction residue being mixed in (contamination).

[Other Additives]

In the method for producing the elastomer spherical particles of the present invention, various additives can be blended in the step (i) as necessary besides the components (A), (B), (C), and (D). Examples of such additive include thickeners, preservatives, pH adjusting agents, antioxidants, and polymerization inhibitors, and regarding each of these, one kind may be used, or an appropriate combination of two or more kinds may be used in appropriate amounts so long as the advantageous effects of the present invention are not impaired.

The order of adding or mixing the respective components in the step (i) is not particularly limited, and example of which may be such that the components (A) and (D) are mixed with other and then the components (B) and (C) are added to the mixture of the components (A) and (D) to prepare an emulsion, or that an emulsion is prepared from the components (A), (B), and (C) to which the component (D) is then added.

Alternatively, an emulsion may be prepared from the components (A), (B), (C), and (D) to which the component (B) may then further be added to have a desired concentration before subjecting it to the step (ii).

A conventionally known emulsifying disperser may be used during the emulsification for preparing the emulsion.

Such conventional emulsifying disperser include, for example, a high-speed rotary shear-type mixer such as a homomixer; a high-speed centrifugal radiation-type mixer such as Homodisper; a high-pressure injection-type emulsifying disperser such as a homogenizer; a colloid mill; an ultrasonic emulsifying machine; and a screw mixer.

Step (ii)

The step (ii) is a step of polymerizing (curing/crosslinking) the component (A) in the emulsion prepared in the step (i) using the above-described polymerization method to obtain a dispersion liquid of elastomer spherical particles.

The conditions for performing the polymerization reaction may be suitably determined based on the type of the polymerization initiator (D), and examples of such include, for example, a thermal method of carrying out a polymerization reaction at a temperature of 30 to 80°C for 10 to 24 hours when a peroxide or azo-based initiator is used as the polymerization initiator (D), a redox polymerization method of carrying out a polymerization reaction at a temperature of 30 to 70°C for 2 to 24 hours when a redox initiator is used as the polymerization initiator (D), and a light irradiation method of carrying out a polymerization reaction under light irradiation when a photopolymerization initiator is used as the polymerization initiator (D).

A conventionally known light source and wavelength range for use in the light (UV) irradiation may be used when the light irradiation method is used.

Step (iii)

In the step (iii), the component (B), as a continuous phase, is washed, dried and removed from the resultant dispersion liquid of elastomer spherical particles to obtain elastomer spherical particles.

When the continuous phase (dispersion medium) is an aqueous phase component, specific methods of carrying out the step (iii) include, for example, a method of concentrating the dispersion liquid using a method such as thermal dehydration, filtration, centrifugation, or decantation, and then washing the concentrate with water if necessary, and finally drying it by heat at normal or reduced pressure, a method of spraying the dispersion liquid into heated air flow for drying the liquid by heat (spray drying), and a method of drying it by heat using a fluid heating medium. A freeze dehydration may also be used as a method for solidifying the dispersion liquid and then reducing the pressure to remove the dispersion medium. When the elastomer spherical particles obtained by removing the dispersion medium are aggregated, they may be crushed using, for example, a mortar or a jet mill.

When the continuous phase (dispersion medium) is an oil phase component, specific methods of carrying out the step (iii) include a method in which a hydrophobic organic solvent is added to the dispersion liquid of the elastomer spherical particles, which is stirred for a certain period of time and then filtered under pressure to wash and remove the component (B) and carry out the solvent replacement. This washing operation may be repeated multiple of times to sufficiently remove the component (B) and perform solvent replacement. Examples of the hydrophobic organic solvent for use to carry out the operation include, for example, toluene, hexane and ethyl acetate.

After that, it may be subjected to, for example, a method of thermal drying under normal or reduced pressure, a method of drying it by heat using a fluid heating medium, or freeze drying to obtain elastomer spherical particles.

Examples

The present invention will be described in greater detail hereunder with reference to working and comparative examples; however, the invention shall not be limited to the following working examples. Further, in these examples, dynamic viscosity is a value measured at 25°C; "%" indicates a concentration and content rates refer to "% by mass". The penetration degree of a rubber cured product is a value measured in accordance with the standards of the Society of Rubber Science and Technology, Japan (SRIS).

The molecular weight of the polyester-polyether copolymer (poly(ε-caprolactone) acrylic-modified polyether) is a weight-average molecular weight measured by GPC using polystyrene as a reference substance under the following conditions.

[Measurement conditions]

Developing solvent: Tetrahydrofuran (THF)
Flow rate: 0.60 mL/min
Detector: Differential refractive index detector (RI)
Column: TSK Guardcolumn Super H-H

TSK gel Super HM-N
TSK gel Super H2500
(All manufactured by Tosoh Corporation)

Column temperature: 40°C
Sample injection volume: 50 μL (THF solution with a concentration of 0.5% by mass)

[Evaluation of biodegradability]

The biodegradability was assessed using a method that employs activated sludge as a biodegradation source based on OECD Guidelines for the Testing of Chemicals, No.301F, July 17, 1992, "Ready Biodegradability: MANOMETRIC RESPIROMETRY TEST". Activated sludge from a municipal sewage treatment plant was utilized as the activated sludge, with a suspended matter concentration of 2,400 mg/L. Sodium benzoate served as a reference (control) substance.

Biodegradability was determined by a method of measuring the oxygen consumption (Biochemical Oxygen Demand (BOD)) in a closed system in an incubator using a BOD meter, and was calculated using the following formula:

$$\text{Biodegradability (\%)} = \text{BOD-B/TOD} \times 100 \qquad \text{—(11)}$$

BOD: Biochemical oxygen demand of test suspended liquid or operation control (measured value: mg)
B: Average biochemical oxygen demand of plant-originated blank (measured value: mg)
TOD: Theoretical oxygen demand required to completely oxidize a test substance or sodium benzoate (calculated value: mg)

[Synthesis of Poly(ε-caprolactone) acrylate-modified polyether 1]

500 g of terminal end primarized EO/PO polyether (Manufactured by Sanyo Chemical Industries, Ltd.; Molecular weight of 2,000, OH group equivalents: 0.0975 mol/100g), 183.6 g of ε-caprolactone (Product name: PLACCEL M; manufactured by Daicel Corporation; molecular weight of 114.1), and 350 g of dehydrated toluene were put into a 2 L separable flask equipped with a stirrer, a thermometer, a cooling pipe, and a dropping funnel, and the mixture was heated under nitrogen flow to 90°C. Having reached the target temperature, 0.68 g (molecular weight of 340.0 g) of tetra-n-butoxy titanium (Molecular weight of 340.0) was added thereinto as a catalyst, and then the aging was performed for 4 to 6 hours at 120°C.

Next, the poly(ε-caprolactone)-modified polyether obtained by the above-explained operations was cooled to near room temperature, and then 60.7 g of triethylamine (molecular weight of 101.2), 100 g of dehydrated toluene, and 0.22 g of dibutylhydroxytoluene (BHT) (Molecular weight of 220.4) as a polymerization inhibitor were added thereinto, which were stirred for a predetermined period of time to uniformly dissolve them after which 49.7 g of acryloyl chloride (Molecular weight of 90.5) was delivered thereinto by drops using a dropping funnel. After confirming the generation of heat, aging was performed at 60°C for 4 hours.

The resultant crude product was subjected to pressure filtration, washing, and cleaning with an aqueous sodium chloride solution using a separating funnel, and centrifugation, and then magnesium sulfate, a silica gel, an activated carbon and/or other suitable materials, were added thereinto, and then subjected to powder treatment by shaking to adsorb and remove the impurities. The respective powders were removed by filtration under pressure after which 0.22 g of dibutylhydroxytoluene (BHT) was added again, and the solvent was distilled away under conditions of 60 to 70°C and 50 mmHg or less to obtain poly(ε-caprolactone) acrylate-modified polyether 1 (See the formula (12) below, weight average molecular weight of 2,880).

[Chem. 20]

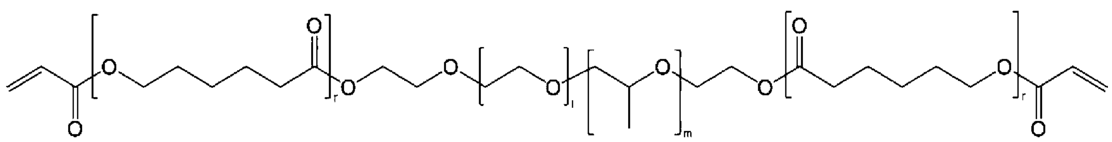

- (12)

$( l \approx 12,\ m \approx 22,\ r \approx 3.3 )$

[Synthesis of Poly(ε-caprolactone) acrylate-modified polyether 2]

300 g of terminal end primarized EO/PO polyether (Manufactured by Sanyo Chemical Industries, Ltd., Molecular weight of 2,000, OH group equivalents: 0.0975 mol/100g), 110.2 g of ε-caprolactone (Product name: PLACCEL M, manufactured by Daicel Corporation, molecular weight of 114.1), and 200 g of dehydrated toluene were put into a 1 L separable flask equipped with a stirrer, a thermometer, a cooling pipe, and a dropping funnel, and the mixture was heated under nitrogen flow to 90°C. Having reached the target temperature, 0.41 g of tetra-n-butoxy titanium (Molecular weight of 340.0) was added thereinto as a catalyst, and then the aging was performed for 4 to 6 hours at 120°C.

Next, the poly(ε-caprolactone)-modified polyether obtained by the above-explained operations was cooled to near room temperature, and then 100 g of dehydrated toluene, 0.96 g of dioctyltindineodecanoate (Product name: Neostan U-830, manufactured by Nitto Kasei Co., Ltd., molecular weight 687.7) and 0.12 g of dibutylhydroxytoluene (BHT) (molecular weight of 220.4) as a polymerization inhibitor were added thereinto, which were stirred for a predetermined period of time to uniformly dissolve them after which 44.4 g of 2-isocyanatoethyl acrylate (Product name: KARENZ AOI manufactured by Showa Chemical Industry Co., Ltd.; Molecular weight of 141.1) was delivered thereinto by drops using a dropping funnel. After confirming the generation of heat, aging was performed at 60°C for 4 hours.

The obtained crude product was cooled to 40°C or less, and then 0.8 g of ethanol was added to make it react with unreacted (residual) isocyanate groups, thereby carrying out a quenching treatment. Then, magnesium sulfate, a silica gel, an activated carbon and/or other suitable materials, were added thereinto, and then subjected to powder treatment by shaking to adsorb and remove the impurities, after which the respective powders were removed by filtration under pressure after which 0.12 g of dibutylhydroxytoluene (BHT) was added again, and the solvent was distilled away under conditions of 60 to 70°C and 50 mmHg or less to obtain poly(ε-caprolactone) acrylate-modified polyether 2 (See the formula (13) below, weight average molecular weight of 3,120).

[Chem. 21]

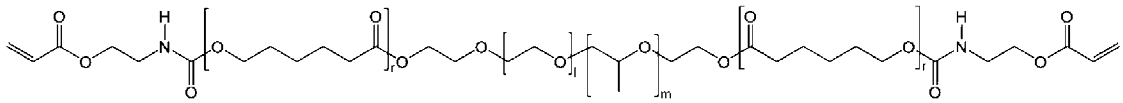

- (13)

( $l \approx 12$, $m \approx 22$, $r \approx 3.3$ )

[Synthesis of poly(ε-caprolactone) acrylate-modified silicone]

300g of carboxy-modified silicone (Molecular weight of 1,200, COOH group equivalents: 0.187 mol/100g), 202.8 g of poly(ε-caprolactone) monoacrylate (Product name: PLACCEL FA2D manufactured by DAICEL CORPORATION, molecular weight of 344.0, OH group equivalents: 0.291 mol/100g), 200 g of dehydrated toluene, and 6.85 g of 4-dimethylaminopyridine (DMAP)(Molecular weight 122.2, manufactured by Tokyo Chemical Industry Co., Ltd.) were put into a 1 L separable flask equipped with a stirrer, a thermometer, a cooling pipe, and a dropping funnel, and they were stirred and mixed together in an ice bath. After the mixture was sufficiently cooled, the dropping funnel was used to deliver thereinto by drops a solution in which 168.9g of N,N'-dicyclohexylcarbodiimide (DCC) (Molecular weight 206.3, manufactured by Tokyo Chemical Industry Co., Ltd.) was solubilized in 173.6g of dehydrated toluene, and then the aging was performed for 20 hours at room temperature. After the aging, 200 g of toluene and 300g of 0.5 mol/L hydrochloric acid were added for washing (to remove DMAP), and then water washing was performed using, in a sequential manner, a saturated sodium hydrogen carbonate solution and 10% sodium chloride solution. After performing the above operations, magnesium sulfate, a silica gel, an activated carbon, and KYOWAAD 700 (manufactured by Kyowa Chemical Industry Co., Ltd.) were each added thereinto in the amount of 10g, and then shaking was performed to adsorb and remove the impurities. After the respective powders were eliminated via pressure filtration, 0.09g of dibutylhydroxytoluene (BHT) was added as a polymerization inhibitor, and the solvent was distilled away under the condition at 60 to 70°C and 10 mm Hg or lower, thereby obtaining a poly(ε-caprolactone) acrylate-modified silicone (See the formula (14) as shown below; Weight-average molecular weight: 2,130).

[Chem. 22]

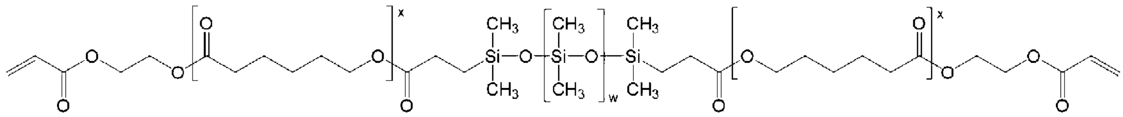

- (14)

( w ≈ 10, x ≈ 2 )

[Working Example 1]

60 g of the poly(ε-caprolactone) acrylate-modified polyether 1 and 0.48 g of 2,2'-azobis(2,4-dimethylvaleronitrile) (hereafter abbreviated as V-65) as a radical polymerization initiator were put into a 500 mL container, followed by using a homogenizing disperser to stir and dissolve them at 1,000 rpm. Next, 10 g of branched-type polyether-modified silicones (Product name: KF-6028, manufactured by Shin-Etsu Chemical Co., Ltd, HLB: 4.0) and 50 g decamethylcyclopentasiloxane (Product name: KF-995, manufactured by Shin-Etsu Chemical Co., Ltd having a kinematic viscosity at 25°C of 4.0 $mm^2/s$) were added into the container, and the mixture was stirred at 4,000 to 5,000 rpm using a homogenizing mixer. As a result, an increase in viscosity was observed, after which stirring was further continued for another 10 minutes to thereby obtain an O/O type emulsion. Next, while performing stirring at 1,500 to 2,000 rpm, 80 g of decamethylcyclopentasiloxane was added to dilute the emulsion to obtain a white emulsion.

This emulsion was then moved to a 500 mL volume separable flask equipped with a stirrer employing anchor-shaped stirring blades, after which the temperature was adjusted to 52 to 55°C using an oil bath, and then stirring and aging was performed for 20 hours to obtain a dispersion liquid of elastomer spherical particles.

About 100 g of toluene was added to the resultant dispersion liquid of elastomer spherical particles, and the mixture was stirred for a predetermined period in a separable flask equipped with a stirrer employing anchor-shaped stirring blades. After that, the decamethylcyclopentasiloxane as a continuous phase was removed by solid-liquid separation using pressure filtration. The above-explained washing and separating operation was performed twice under the toluene solvent and once under the ethanol solvent to thereby remove the continuous phase and replace it with a volatile solvent (< 100°C).

Finally, the resultant product was left to stand and dried for more than 24 hours in an air thermostatic chamber at 70°C to obtain the target product of white to pale yellow powdery elastomer spherical particles.

The obtained elastomer spherical particles were observed using an electron microscope (Scanning electron microscope of S-4700 manufactured by Hitachi High-Tech Corporation), and it was therefore confirmed that the particles were elastomer spherical particles having particle diameters around 100 μm.

The obtained elastomer spherical particles were also re-dispersed using a surfactant to prepare an aqueous solution, which was subjected to the measurement by the electrical resistance method, and it was found that the particles had a volume-average particle diameter of 98 μm.

FIG. 1 is an SEM photomicrograph of the elastomer spherical particles each consisting of the poly(ε-caprolactone) acrylate-modified polyether 1 in Working Example 1.

The SEM photomicrograph shown in FIG. 1 indicates that the elastomer spherical particles consisting of the poly(ε-caprolactone) acrylate-modified polyether 1 in Working Example 1 had aspect ratios of substantially 1.

Further, the hardness of the rubber making up the rubber particles was measured as follows. 30.0 g of poly(ε-caprolactone) acrylate-modified silicone 1 and 0.24 g of 2,2'-azobis(2,4-dimethylvaleronitrile) (Product name: V-65 manufactured by FUJIFILM Wako Pure Chemical Corporation with molecular weight of 248.4) were mixed and stirred and then poured into a petri dish of aluminum so that the mixture would have a thickness of 10 mm therein. It was left to stand for 1 hour in an air thermostatic chamber at 70°C, and there was obtained a non-sticky (non-tacky) planar rubber. The hardness of the obtained planar rubber was measured, and the results indicated a rubber hardness of 73 on an Asker C durometer and 55 on an Asker A durometer.

Biodegradability assessment of the poly(ε-caprolactone) acrylate-modified polyether 1 was carried out for 60 days at an incubation temperature of 22 ±1°C based on the above-explained procedures. The result indicated that the poly(ε-caprolactone) acrylate-modified polyether 1 exhibited degradability of 62% on average after 28 days and 73% on average after 60 days, which satisfies a determination criterion of 60% biodegradability after 28 days, which was therefore determined as a "readily biodegradable substance."

Accordingly, when the poly(ε-caprolactone) acrylate-modified polyether 1 or the elastomer spherical particles made of the poly(ε-caprolactone) acrylate-modified polyether 1 are used and then flowed directly into the ocean via land waters, it is presumed that they will eventually decompose without remaining in the environment as copolymers or particles.

[Working Example 2]

Elastomer spherical particles were obtained in the same manner as in Working Example 1, except that the linear-type polyether-modified silicone (product name: KF-6017 manufactured by Shin-Etsu Chemical Co., Ltd, HLB: 4.5) was used as the emulsifier in place of the branched-type polyether-modified silicone (product name: KF-6028). The obtained elastomer spherical particles were observed using an electron microscope in the same manner as in Working Example 1, and the results indicated that the particles were elastomer spherical particles having particle diameters around 100 μm.
The obtained elastomer spherical particles were also re-dispersed using a surfactant to prepare an aqueous solution, which was subjected to the measurement by the electrical resistance method, and the results indicated that the particles had a volume-average particle diameter of 72 μm.

[Working Example 3]

Elastomer spherical particles were obtained in the same manner as in Working Example 1, except that the linear-type polyether-modified silicone (product name: KF-6017 manufactured by Shin-Etsu Chemical Co., Ltd, HLB: 4.5) was used as the emulsifier in place of the branched-type polyether-modified silicone (product name: KF-6028), that 20 g of polyether-modified silicone gel activator (product name: KSG-210 manufactured by Shin-Etsu Chemical Co., Ltd.) was also added at the time of adding this linear-type polyether-modified silicone, and that the formulated amount of the decamethylcyclopentasiloxane during emulsification was changed from 50 g to 40 g.
The obtained elastomer spherical particles were observed using an electron microscope in the same manner as in Working Example 1, and the results indicated that the particles were elastomer spherical particles having particle diameters of just under 100 μm.
The obtained elastomer spherical particles were also re-dispersed using a surfactant to prepare an aqueous solution, which was subjected to the measurement by the electrical resistance method, and the results indicated that that the particles had a volume-average particle diameter of 63 μm.

[Working Example 4]

Elastomer spherical particles were obtained in the same manner as in Working Example 3, except that the component (B) serving as a continuous phase during the emulsification was changed from cyclopentasiloxane to polydimethylsiloxane (product name: KF-96-100cs manufactured by Shin-Etsu Chemical Co., Ltd having a kinematic viscosity at 25°C of 100 $mm^2/s$).
The obtained elastomer spherical particles were observed using an electron microscope in the same manner as in Working Example 1, and the results indicated that the obtained particles were elastomer spherical particles having particle diameters of about 50 to 70 μm with uniform particle diameter distribution.
The obtained elastomer spherical particles were also re-dispersed using a surfactant to prepare an aqueous solution, which was subjected to the measurement by the electrical resistance method and the results indicated that the particles had a volume-average particle diameter of 57 μm.

[Working Example 5]

60 g of the poly(ε-caprolactone) acrylate-modified polyether 2 and 0.48 g of V-65 radical polymerization initiator were put into a 500 mL container, followed by using a homogenizing disperser to stir and dissolve them at 1,000 rpm. Next, 10g of linear-type polyether-modified silicone (Product name: KF-6017, HLB:4.5), 20 g of polyether-modified silicone gel activator (product name: KSG-210), and 40 g of polydimethylsiloxane (product name: KF-96-100cs having a kinematic viscosity at 25°C of 100 $mm^2/s$) were added thereinto, and the mixture was stirred at 4,000 to 5,000 rpm using a homogenizing mixer. As a result, an increase in viscosity was observed, after which stirring was further continued for another 10 min to thereby obtain an O/O type emulsion. Next, while performing stirring at 1,500 to 2,000 rpm, 70 g of cyclopentasiloxane was added to dilute the emulsion to obtain a white emulsion.
The processes after preparing the emulsion were performed in the same manners as those of the working example 1 to obtain elastomer spherical particles.
The obtained elastomer spherical particles were observed using an electron microscope in the same manner as in Working Example 1, and the results indicated that the obtained particles were elastomer spherical particles having particle diameters of about 20 to 50 μm with uniform particle diameter distribution.
The obtained elastomer spherical particles were also re-dispersed using a surfactant to prepare an aqueous solution, which was subjected to the measurement by the electrical resistance method, and the results indicated that that the particles had a volume-average particle diameter of 30 μm.
FIG. 2 is an SEM photomicrograph of the elastomer spherical particles each consisting of the poly(ε-caprolactone) acrylate-modified polyether 2 in Working Example 5. The SEM photomicrograph of FIG. 2 indicates that the elastomer spherical particles each consisting of the poly(ε-caprolactone) acrylate-modified polyether 2 in Working Example 5 had aspect ratios of substantially 1.

The hardness of the rubber constituting the rubber particles was measured in the same manner as in the working example 1, and as a result, there was obtained a non-sticky (non-tacky) planar rubber whose rubber hardness exhibited a value of 76 on an Asker C durometer and 62 on an Asker A durometer.

Biodegradability assessment of the poly(ε-caprolactone) acrylate-modified polyether 2 was carried out for 60 days at an incubation temperature of 22 ±1°C based on the above-explained procedures. The results indicated that the poly(ε-caprolactone) acrylate-modified polyether 2 exhibited a degradability of 40% on average after 28 days, 65% on average after 60 days, which satisfied a determination criterion of 60% biodegradability after 60 days, which was therefore determined as an "essentially biodegradable substance."

Accordingly, when the poly(ε-caprolactone) acrylate-modified polyether 2 or the elastomer spherical particles made of the poly(ε-caprolactone) acrylate-modified polyether 2 are used and then flowed directly into the ocean via land waters, it is presumed that they will eventually decompose without remaining in the environment as copolymers or particles.

[Working Example 6]

Elastomer spherical particles were obtained in the same manner as in Working Example 5, except that the formulated amount of polydimethylsiloxane (Product name: F-96-100cs) as the component (B) that is a continuous phase during the emulsification was changed from 40 g to 20 g.

The obtained elastomer spherical particles were observed using an electron microscope in the same manner as in Working Example 1, and the results indicated that the particles were elastomer spherical particles having particle diameters of about 50 to 70 μm with uniform particle diameter distribution.

The obtained elastomer spherical particles were also re-dispersed using a surfactant to prepare an aqueous solution, which was subjected to the measurement by the electrical resistance method, and the results indicated that that the particles had a volume-average particle diameter of 26 μm.

[Comparative Example 1]

The hardness of the poly(ε-caprolactone) acrylate-modified silicone rubber was measured in the same manner as in the working example 1, and as a result, there was obtained a non-sticky (non-tacky) planar rubber whose rubber hardness exhibited a value of 71 on an Asker C durometer.

Biodegradability assessment of the poly(ε-caprolactone) acrylate-modified silicone was carried out for 28 days at an incubation temperature of 22 ±1°C based on the above-explained procedures. The result indicated that the poly(ε-caprolactone) acrylate-modified silicone had a degradability of only 26% on average, which was therefore determined as a "substance not readily biodegradable" because it did not satisfy a determination criterion of 60% biodegradability after 28 days.

The copolymer, elastomer spherical particles, and dispersion liquid of the elastomer spherical particles according to the present invention have their unique structures and compositions, which therefore make them expected to be particularly useful for, for example, cosmetics. They are also expected to exhibit or provide high levels of biodegradability because they have a polyester (particularly a poly(ε-caprolactone) structure and a polyether structure in the comonomer or in the powder/particle skeleton, where these structures are regarded as biodegradable skeletons.

## Claims

**1.** A polyester-polyether copolymer having at least two radical polymerizable unsaturated groups per molecule which is represented by a general formula (1) or (2) defined as:

[Chemical formula 1]

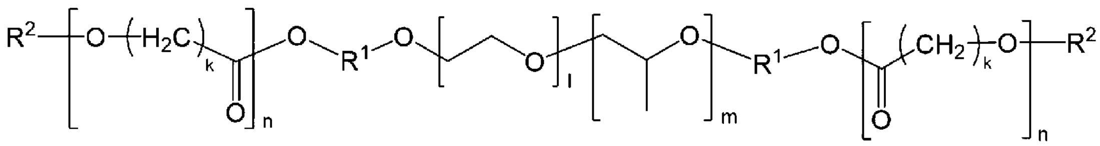

- (1)

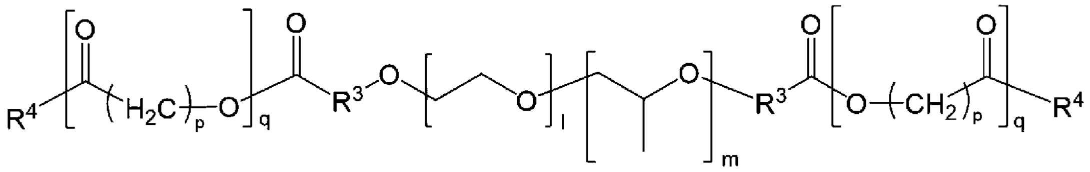

- (2)

wherein, in the general formula (1), each $R^1$ independently represents a divalent hydrocarbon group having 1 to 10 carbon atoms, each $R^2$ independently represents a radically polymerizable functional group-containing organic group represented by a general formula (3a), (3b), or (3c) as defined below, each k independently represents a number that satisfies $1 \leq k \leqq 10$, 1 is a number that satisfies $1 \leq l \leq 1{,}000$, m is a number that satisfies $1 \leq m \leq 1{,}000$, each n independently represents a number that satisfies $1 \leq n \leqq 100$, and

wherein, in the general formula (2), each $R^3$ independently represents a divalent hydrocarbon group having 1 to 10 carbon atoms, each $R^4$ independently represents a radically polymerizable functional group-containing organic group represented by a general formula (4a) or (4b) as defined below, each p independently represents a number that satisfies $1 \leq p \leqq 10$, 1 is a number that satisfies $1 \leq l \leq 1{,}000$, m is a number that satisfies $1 \leq m \leq 1{,}000$, each q independently represents a number that satisfies $1 \leq q \leq 100$,

[Chemical formula 2]

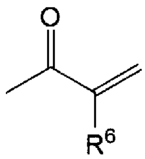

- (3a)

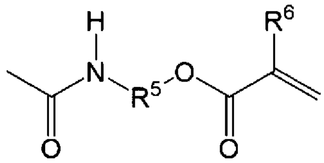

- (3b)

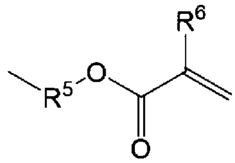

- (3c)

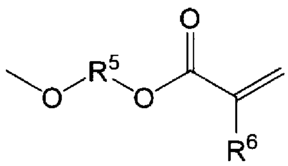

- (4a)

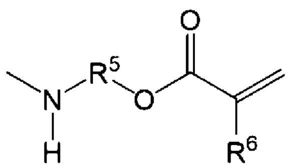

- (4b)

wherein, in the general formulae (3a), (3b), (3c), (4a), and (4b), each $R^5$ independently represents a divalent hydrocarbon group having 1 to 8 carbon atoms, each $R^6$ independently represents a hydrogen atom or a hydrocarbon group having 1 to 3 carbon atoms.

**2.** The polyester-polyether copolymer according to claim 1 represented by a general formula (5) defined as:

[Chemical formula 3]

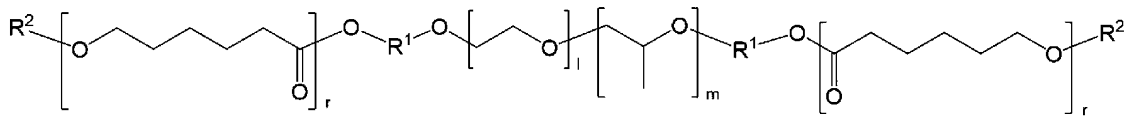

- (5)

wherein, in the general formula (5), each $R^1$ independently represents a divalent hydrocarbon group having 1 to 10 carbon atoms, l is a number that satisfies $1 \leq l \leq 1{,}000$, m is a number that satisfies $1 \leq m \leq 1{,}000$, each r independently represents a number that satisfies $1 \leq r \leq 100$, and each $R^2$ independently represents a radically polymerizable functional group-containing organic group represented by a general formula (3a), (3b), or (3c) defined as:

[Chemical formula 4]

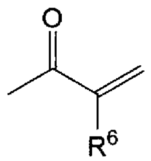

- (3a)

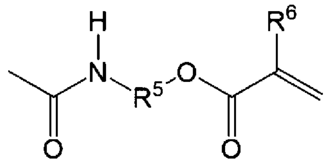

- (3b)

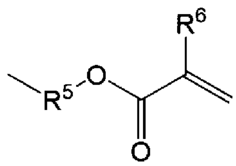

- (3c)

wherein, in the general formulae (3a), (3b), and (3c), each $R^5$ independently represents a divalent hydrocarbon group having 1 to 8 carbon atoms, each $R^6$ independently represents a hydrogen atom or a hydrocarbon group having 1 to 3 carbon atoms.)

**3.** An elastomer spherical particle composed of a polymer containing a structural unit originated from a copolymer comprising a polyester structure and a polyether structure, wherein the spherical particle has a volume-average particle diameter of 0.5 to 200 μm.

**4.** The elastomer spherical particle according to claim 3, wherein the copolymer is a polyester-polyether copolymer having at least two radical polymerizable unsaturated groups per molecule.

**5.** The elastomer spherical particle according to claim 4, wherein the copolymer is a polyester-polyether copolymer represented by a general formula (1) or (2) defined as:

[Chemical formula 5]

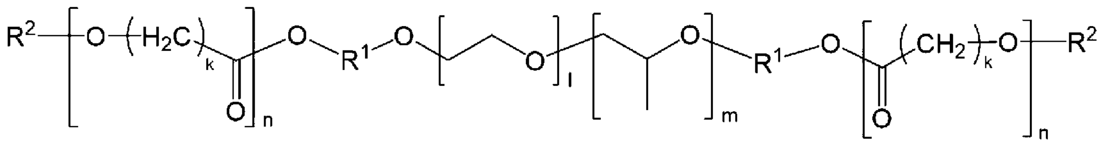

- (1)

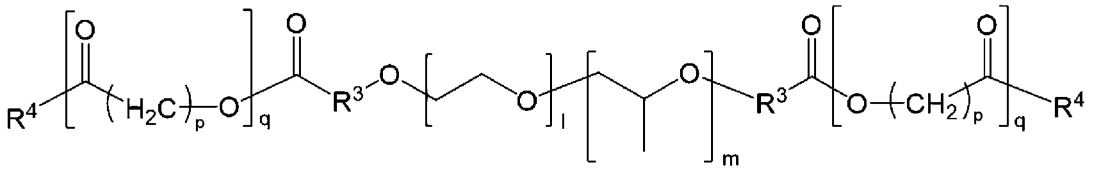

- (2)

wherein, in the general formula (1), each $R^1$ independently represents a divalent hydrocarbon group having 1 to 10 carbon atoms, each $R^2$ independently represents a radically polymerizable functional group-containing organic group represented by a general formulae (3a), (3b), or (3c) as defined below, each k independently is a number that satisfies $1 \leq k \leqq 10$, l is a number that satisfies $1 \leq l \leq 1{,}000$, m is a number that satisfies $1 \leq m \leq 1{,}000$, each n independently represents a number that satisfies $1 \leq n \leqq 100$, and

wherein, in the general formula (2), each $R^3$ independently represents a divalent hydrocarbon group having 1 to 10 carbon atoms, each $R^4$ independently represents a radically polymerizable functional group-containing organic group represented by a general formula (4a) or (4b) as defined below, each p independently represents a number that satisfies $1 \leq p \leqq 10$, 1 is a number that satisfies $1 \leq l \leq 1{,}000$, m is a number that satisfies $1 \leq m \leq 1{,}000$, each q independently represents a number that satisfies $1 \leq q \leq 100$,

[Chemical formula 6]

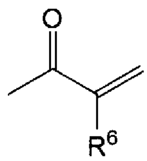

- (3a)

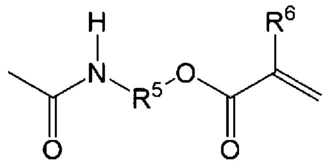

- (3b)

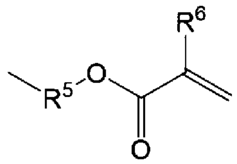

- (3c)

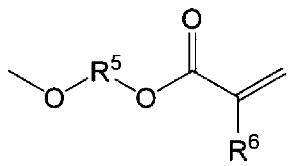

- (4a)

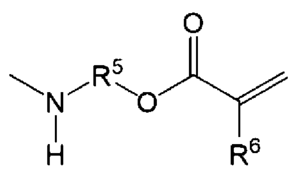

- (4b)

wherein, in the general formulae (3a), (3b), (3c), (4a), and (4b), each $R^5$ independently represents a divalent hydrocarbon group having 1 to 8 carbon atoms, each $R^6$ independently represents a hydrogen atom or a hydrocarbon group having 1 to 3 carbon atoms.

**6.** The elastomer spherical particle according to claim 5, wherein the copolymer is a polyester-polyether copolymer represented by a general formula (5) defined as:

[Chemical formula 7]

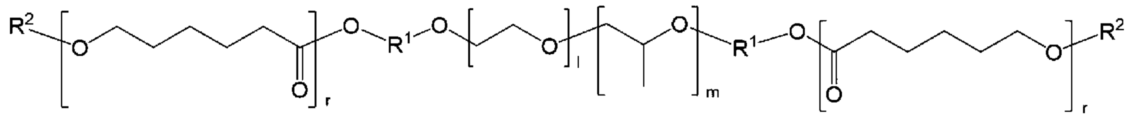

- (5)

wherein, in the general formula (5), each $R^1$ independently represents a divalent hydrocarbon group having 1 to 10 carbon atoms, l is a number that satisfies $1 \leq l \leq 1{,}000$, m is a number that satisfies $1 \leq m \leq 1{,}000$, each r independently represents a number that satisfies $1 \leq r \leq 100$, and each $R^2$ independently represents a radically polymerizable functional group-containing organic group represented by a general formula (3a), (3b), or (3c) defined as:

[Chemical formula 8]

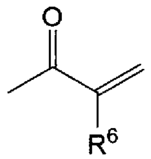

- (3a)

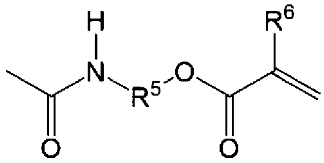

- (3b)

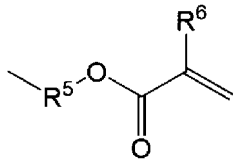

- (3c)

wherein, in the general formulae (3a), (3b), and (3c), each $R^5$ independently represents a divalent hydrocarbon group having 1 to 8 carbon atoms, each $R^6$ independently represents a hydrogen atom or a hydrocarbon group having 1 to 3 carbon atoms.

**7.** A dispersion liquid of the elastomer spherical particle according to any one of claims 3 to 6, wherein the elastomer spherical particle is dispersed in at least one type of dispersion medium selected from a silicone oil, a hydrocarbon oil, a higher fatty acid, an ester oil, a liquid oil, and water.

**8.** A method of producing the elastomer spherical particle according to any one of claims 3 to 6, including the steps (i) and (ii) of

(i) preparing an O/O type or O/W type emulsion by stirring and emulsifying the components of

(A) a copolymer containing a polymerizable group, said copolymer having a polyester structure and a polyether structure,
(B) an oil or aqueous phase component that does not dissolve in the component (A),
(C) a surfactant, and
(D) a polymerization initiator;

(ii) polymerizing the component (A) in the O/O type or O/W type emulsion obtained in the step (i) to obtain a dispersion liquid of elastomer spherical particles; and
(iii) washing, drying and removing the component (B), as continuous phase, from the dispersion liquid of elastomer spherical particles obtained in the step (ii).

**9.** The method according to claim 8, wherein the step (i) is a step of (i) preparing an O/O type emulsion by stirring and emulsifying the components of

(A) a copolymer containing a polymerizable group, said copolymer having a polyester structure and a polyether structure,
(B) an oil phase component that does not dissolve in the component (A),
(C) a surfactant, and
(D) a polymerization initiator.

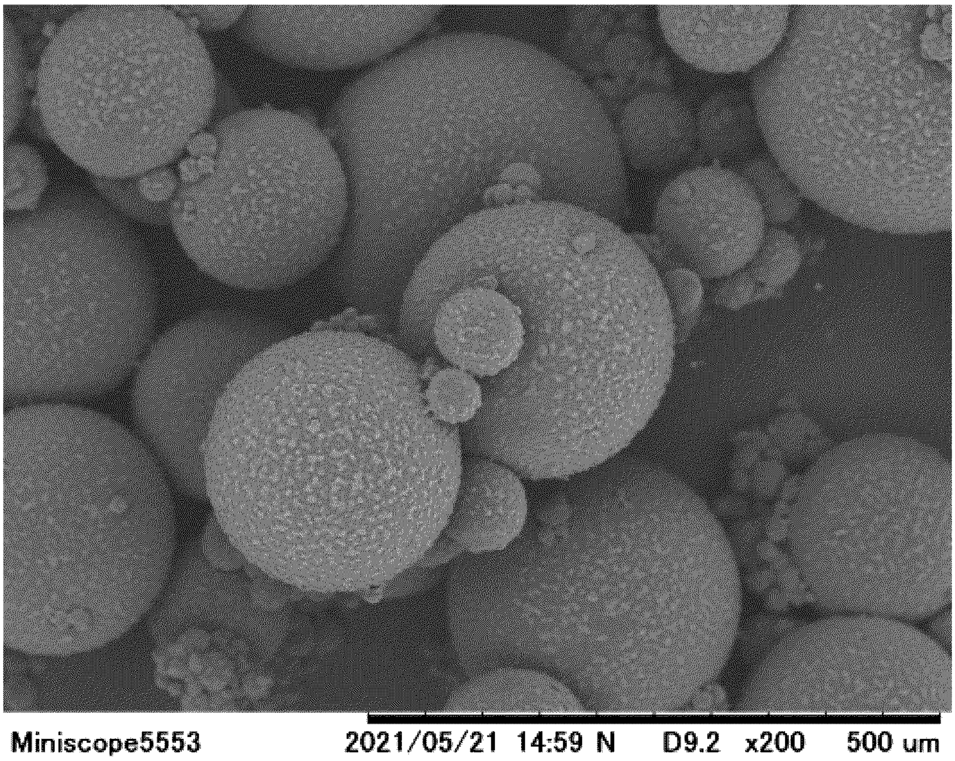


FIG.1

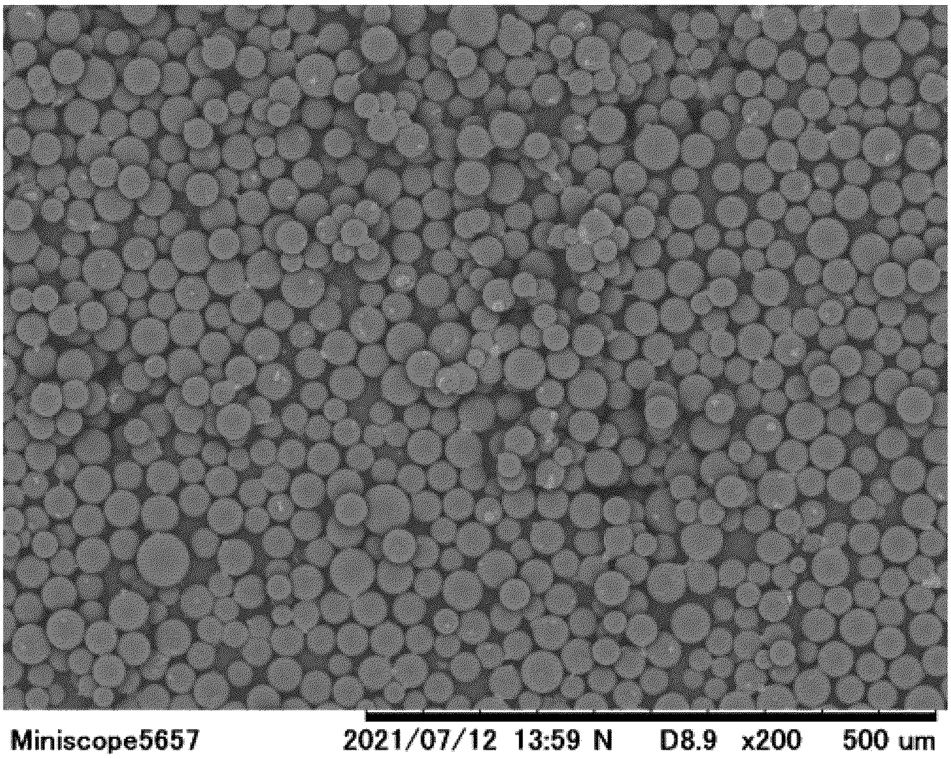
Miniscope5657
2021/07/12 13:59 N
D8.9 x200
500 um

FIG.2A

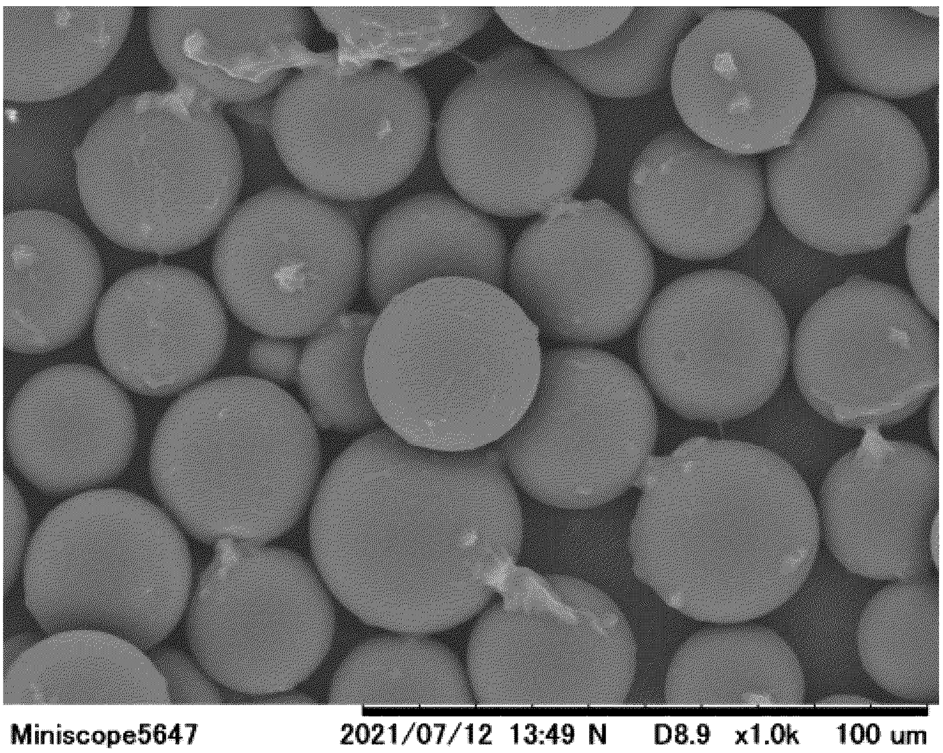
Miniscope5647
2021/07/12 13:49 N
D8.9 x1.0k
100 um

FIG.2B

## INTERNATIONAL SEARCH REPORT

International application No.
**PCT/JP2023/020919**

**A. CLASSIFICATION OF SUBJECT MATTER**

***C08F 299/02***(2006.01)i; ***C08F 2/08***(2006.01)i; ***C08F 2/24***(2006.01)i
FI: C08F299/02; C08F2/24 Z; C08F2/08

According to International Patent Classification (IPC) or to both national classification and IPC

**B. FIELDS SEARCHED**

Minimum documentation searched (classification system followed by classification symbols)

C08F; C08J3;C08G63;C08L

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | WO 2022/087464 A1 (HYBRID CERAMIC) 28 April 2022 (2022-04-28) claims, paragraphs [0035], [0094], [0109] | 1, 2 |
| Y | | 3-9 |
| Y | CN 109232838 A (ZHEJIANG UNIVERSITY OF TECHNOLOGY) 18 January 2019 (2019-01-18) claims, paragraph [0018] | 1-9 |
| X | US 2021/0178027 A1 (THE GENERAL HOSPITAL CORPORATION) 17 June 2021 (2021-06-17) claims, paragraph [0085], examples | 1-7 |
| Y | | 8, 9 |
| X | WO 2018/151161 A1 (FUJIFILM CORPORATION) 23 August 2018 (2018-08-23) claims, paragraphs [0099], [0110]-[0118], [0148], table 2 | 3, 4, 7 |
| Y | | 8, 9 |
| X | WO 2018/134921 A1 (KAO CORPORATION) 26 July 2018 (2018-07-26) claims, paragraphs [0016], [0039] | 3, 7 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **31 July 2023** | **22 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

## INTERNATIONAL SEARCH REPORT

International application No.
**PCT/JP2023/020919**

### C. DOCUMENTS CONSIDERED TO BE RELEVANT

| Category* | Citation of document, with indication, where appropriate, of the relevant passages | Relevant to claim No. |
|---|---|---|
| X<br>Y | JP 2015-83668 A (SANYO CHEMICAL IND LTD) 30 April 2015 (2015-04-30)<br>claims, paragraphs [0013], [0025], [0026], [0097]-[0101], [0109], [0120] | 3, 4, 7<br>8, 9 |
| X | JP 2008-506021 A (E.I. DUPONT DE NEMOURS AND COMPANY) 28 February 2008 (2008-02-28)<br>claims, paragraphs [0084], [0085], [0180] | 3, 7 |
| X | WO 2012/086569 A1 (TORAY INDUSTRIES, INC.) 28 June 2012 (2012-06-28)<br>claims | 3 |
| X | JP 2007-325910 A (TORAY INDUSTRIES, INC.) 20 December 2007 (2007-12-20)<br>claims, examples | 3 |
| Y | JP 2007-262119 A (TOYO BOSEKI) 11 October 2007 (2007-10-11)<br>paragraph [0017] | 1-9 |
| Y | JP 2003-261658 A (YASUHARA CHEMICAL CO LTD) 19 September 2003 (2003-09-19)<br>claims | 1-9 |
| Y | JP 6-199962 A (TAKEMOTO OIL & FAT CO LTD) 19 July 1994 (1994-07-19)<br>paragraphs [0025], [0026] | 3-6 |
| Y | JP 2019-199596 A (XEROX CORPORATION) 21 November 2019 (2019-11-21)<br>claims, paragraphs [0001], [0017] | 3-7 |
| Y | JP 2018-514638 A (POLYNT COMPOSITES USA INC.) 07 June 2018 (2018-06-07)<br>claims, paragraph [0009], examples | 8 |
| Y | JP 2002-220473 A (JAPAN U-PICA CO LTD) 09 August 2002 (2002-08-09)<br>claims, examples | 8 |
| Y | JP 2004-91767 A (DAINICHISEIKA COLOR & CHEM MFG CO LTD) 25 March 2004 (2004-03-25)<br>claims, paragraphs [0016], [0027], [0032] | 9 |
| Y | JP 2000-327793 A (TEIJIN LTD) 28 November 2000 (2000-11-28)<br>claims, paragraphs [0003]-[0008], examples | 9 |

Form PCT/ISA/210 (second sheet) (January 2015)

**INTERNATIONAL SEARCH REPORT**

International application No.
**PCT/JP2023/020919**

**Box No. III Observations where unity of invention is lacking (Continuation of item 3 of first sheet)**

This International Searching Authority found multiple inventions in this international application, as follows:

Claims are classified into the following two inventions.
(Invention 1)
Claims 1, 2 are classified as invention 1.
(Invention 2)
The invention in claims 3-9 shares, with claim 1 classified as invention 1, the common technical feature of a "copolymer with polyester structure and polyether structure."
However, said technical feature does not make a contribution over the prior art in light of the disclosure of document A, and thus cannot be said to be a special technical feature.
Document A: WO 2017/171031 A1 (KANEKA CORP) 05 October 2017 (2017-10-05)

1. ☑ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☑ No protest accompanied the payment of additional search fees.

**INTERNATIONAL SEARCH REPORT**
**Information on patent family members**

International application No.
**PCT/JP2023/020919**

| Patent document cited in search report | Publication date (day/month/year) | Patent family member(s) | Publication date (day/month/year) |
|---|---|---|---|
| WO 2022/087464 A1 | 28 April 2022 | (Family: none) | |
| CN 109232838 A | 18 January 2019 | (Family: none) | |
| US 2021/0178027 A1 | 17 June 2021 | WO 2017/136726 A1<br>EP 3411422 A1 | |
| WO 2018/151161 A1 | 23 August 2018 | US 2019/0372160 A1<br>claims, paragraphs [0177], [0178], [0205]-[0215], [0289]-[0294], table 2<br>EP 3584870 A1<br>KR 10-2019-0103337 A<br>CN 110291674 A | |
| WO 2018/134921 A1 | 26 July 2018 | US 2019/0359827 A1<br>claims, paragraphs [0034], [0035], [0083]<br>EP 3572466 A1 | |
| JP 2015-83668 A | 30 April 2015 | (Family: none) | |
| JP 2008-506021 A | 28 February 2008 | US 2006/0009610 A1<br>claims, paragraphs [0092], [0093], [0188]<br>WO 2006/010062 A1<br>EP 1789471 A1<br>CN 1980977 A | |
| WO 2012/086569 A1 | 28 June 2012 | US 2013/0273372 A1<br>claims<br>EP 2656864 A1<br>CN 103260663 A | |
| JP 2007-325910 A | 20 December 2007 | (Family: none) | |
| JP 2007-262119 A | 11 October 2007 | (Family: none) | |
| JP 2003-261658 A | 19 September 2003 | (Family: none) | |
| JP 6-199962 A | 19 July 1994 | (Family: none) | |
| JP 2019-199596 A | 21 November 2019 | US 2019/0352521 A1<br>claims, paragraphs [0002], [0023]<br>EP 3569634 A1<br>CN 110498912 A | |
| JP 2018-514638 A | 07 June 2018 | US 2016/0251541 A1<br>claims, paragraphs [0022], [0023], examples<br>WO 2016/138243 A1<br>EP 3265518 A1<br>CN 107429089 A<br>KR 10-2017-0128379 A | |
| JP 2002-220473 A | 09 August 2002 | US 2003/0114622 A1<br>claims, examples<br>WO 2002/059172 A1<br>EP 1273600 A1<br>CN 1460113 A<br>KR 10-2002-0092998 A | |
| JP 2004-91767 A | 25 March 2004 | (Family: none) | |
| JP 2000-327793 A | 28 November 2000 | (Family: none) | |

Form PCT/ISA/210 (patent family annex) (January 2015)

## REFERENCES CITED IN THE DESCRIPTION

*This list of references cited by the applicant is for the reader’s convenience only. It does not form part of the European patent document. Even though great care has been taken in compiling the references, errors or omissions cannot be excluded and the EPO disclaims all liability in this regard.*

### Patent documents cited in the description

- JP S6312489 A
- JP H655805 A
- JP H2102263 A
- JP H812546 A
- JP H812545 A
- JP H417162 A
- JP H466446 A
- JP S58219218 A
- JP H885753 A
- JP A A
- JP H10182987 B
- JP 2001040214 A
- JP S63297313 A
- JP H812524 A
- JP H920631 A

### Non-patent literature cited in the description

- Ready Biodegradability: MANOMETRIC RESPIROMETRY TEST. *Testing of Chemicals*, 17 July 1992 (301F)